# EUROPEAN PATENT APPLICATION

(11) **EP 4 415 133 A1**
(43) Date of publication of application: **14.08.2024**
(21) Application number: 22878602.6
(22) Date of filing: 06.10.2022
(51) Int. Cl.: H01M 50/184, H01M 50/178, H01M 50/186, H01M 50/193, H01M 50/197, H01M 50/198, H01M 50/342

(54) **ADHESIVE FILM FOR METAL TERMINALS, METHOD FOR PRODUCING ADHESIVE FILM FOR METAL TERMINALS, METAL TERMINAL PROVIDED WITH ADHESIVE FILM FOR METAL TERMINALS, POWER STORAGE DEVICE, AND METHOD FOR PRODUCING POWER STORAGE DEVICE**

(30) Priority: 06.10.2021 JP 2021165117
(71) Applicant: Dai Nippon Printing Co., Ltd., Tokyo 162-8001 (JP)
(72) Inventor: KATO, Takahiro, Tokyo 162-8001 (JP); SASAKI, Miho, Tokyo 162-8001 (JP); HAYASHI, Shinji, Tokyo 162-8001 (JP)
(74) Representative: Müller-Boré & Partner Patentanwälte PartG mbB
(86) International application number: PCT/JP2022/037522
(87) International publication number: WO 2023/058735

(57) **Abstract**

This adhesive film for metal terminals is interposed between a metal terminal that is electrically connected to an electrode for a power storage device element, and a power storage device exterior material that seals the power storage device element. The adhesive film for metal terminals is constituted of a laminate comprising at least a resin layer A and a resin layer B. The resin layer A has a melting peak temperature of 105-130°C. The resin layer B has a cross-sectional hardness, measured in an environment with a temperature of 110°C, of at least 15 N/mm².

## Description

### TECHNICAL FIELD

The present disclosure relates to an adhesive film for metal terminal, a method for manufacturing an adhesive film for metal terminal, a metal terminal with adhesive film for metal terminal, an electrical storage device, and a method for manufacturing an electrical storage device.

### BACKGROUND ART

Various types of electrical storage devices have been developed heretofore, and in every electrical storage device, an exterior material for electrical storage devices is an essential member for sealing electrical storage device elements such as an electrode and an electrolyte. Metallic exterior materials for electrical storage devices have been often used heretofore as exterior materials for electrical storage devices, and in recent years, electrical storage devices have been required to be diversified in shape, and desired to be thinner and lighter as performance of, for example, electric cars, hybrid electric cars, personal computers, cameras and mobile phones has been enhanced. However, metallic exterior materials for electrical storage devices that have often been heretofore used have the disadvantage that it is difficult to keep up with diversification in shape, and there is a limit on weight reduction.

Thus, in recent years, a laminated sheet with a base material layer, an adhesive layer, a barrier layer and a heat-sealable resin layer laminated in the stated order has been proposed as an exterior material for electrical storage devices which is easily processed into diversified shapes and is capable of achieving thickness reduction and weight reduction. When such a laminated film-shaped exterior material for electrical storage devices is used, an electrical storage device element is sealed with the exterior material for electrical storage devices by heat-sealing the peripheral edge portion of the exterior material for electrical storage devices while the heat-sealable resin layers located at the innermost layer of the exterior material for electrical storage devices are opposed to each other.

A metal terminal protrudes from the heat-sealed portion of the exterior material for electrical storage devices, and the electrical storage device element sealed by the exterior material for electrical storage devices is electrically connected to the outside by a metal terminal electrically connected to an electrode of the electrical storage device element. That is, of the portion where the exterior material for electrical storage devices is heat-sealed, a portion where the metal terminal is present is heat-sealed to the metal terminal is sandwiched between heat-sealable resin layers. Since the metal terminal and the heat-sealable resin layer are composed of different materials, adhesion is likely to decrease at an interface between the metal terminal and the heat-sealable resin layer.

Thus, an adhesive film may be disposed between the metal terminal and the heat-sealable resin layer for the purpose of, for example, improving adhesion between the metal terminal and the heat-sealable resin layer. Examples of the adhesive film include those described in Patent Document 1.

### PRIOR ART DOCUMENT

### PATENT DOCUMENTS

Patent Document 1: Japanese Patent Laid-open Publication No. 2015-79638
Patent Document 2: Japanese Patent Laid-open Publication No. 2002-8616

### SUMMARY OF THE INVENTION

### PROBLEMS TO BE SOLVED BY THE INVENTION

In recent years, with high-speed and large-capacity data communication by smartphones, the amount of electricity consumed has increased, and an attempt has been made to increase the capacity of electrical storage devices. However, increasing the capacity of a battery involves an increase in container size and an increase in amount of reactive substances, and also leads to an increase in amount of gas generated if thermal runaway of an electrical storage device occurs (i.e., the temperature of the electrical storage device increases), thus raising the risk of explosion caused by an increase in internal pressure of the electrical storage device. In an electrical storage device (for example, a metal can battery) with a metallic exterior material, a safety valve is attached to secure safety at the time of generation of gas (see Patent Document 2).

However, in an electrical storage device with a laminated film-shaped exterior material, it is difficult to attach such a safety valve, and avoiding expansion of the electrical storage device which is caused by gas generated inside the electrical storage device having reached a high temperature is a challenge.

Under these circumstances, a main object of the present disclosure is to provide an adhesive film for metal terminal which is interposed between a metal terminal that is electrically connected to an electrode of an electrical storage device element and an exterior material for electrical storage devices which seals the electrical storage device element, the adhesive film for metal terminal being capable of ensuring close contact between a metal terminal of an electrical storage device and a heat-sealable resin layer of the exterior material for electrical storage devices until the electrical storage device reaches a high temperature (for example, about 100°C to 130°C, preferably 110°C to 130°C, particularly preferably 120°C to 130°C), and unsealing the electrical storage device at the location of the adhesive film for metal terminal to release gas generated inside the electrical storage device to the outside when the electrical storage device reaches the high temperature (for example, about 100°C to 130°C, preferably 110°C to 130°C, particularly preferably 120°C to 130°C). Further, an object of the present disclosure is to provide a method for manufacturing an adhesive film for metal terminal, a metal terminal with adhesive film for metal terminal, an electrical storage device, and a method for manufacturing the electrical storage device.

### MEANS FOR SOLVING THE PROBLEM

The inventors of the present disclosure have extensively conducted studies for solving the above-described problems. As a result, the inventors have found that an adhesive film for metal terminal which is interposed between a metal terminal that is electrically connected to an electrode of an electrical storage device element and an exterior material for electrical storage devices which seals the electrical storage device element, the adhesive film for metal terminal including laminate including at least a resin layer A and a resin layer B, in which the resin layer A has a melting peak temperature of 105°C or higher and 130°C or lower and the resin layer B has a cross-sectional hardness of 15 N/mm² or more as measured in an environment at a temperature of 110°C, is thus capable of ensuring close contact between a metal terminal of an electrical storage device and a heat-sealable resin layer of the electrical storage device exterior material until the electrical storage device reaches a high temperature (for example, about 100°C to 130°C), and unsealing the electrical storage device at the location of the adhesive film for metal terminal (specifically, the location of the resin layer A having a melting peak temperature of 105°C or higher and 130°C or lower) to release gas generated inside the electrical storage device when the electrical storage device reaches the high temperature. The present disclosure is an invention that has been completed by further conducting studies based on the above-mentioned findings.

That is, the present disclosure provides an invention of an aspect as described below.

An adhesive film for metal terminal which is interposed between a metal terminal that is electrically connected to an electrode of an electrical storage device element and an exterior material for electrical storage devices which seals the electrical storage device element,
the adhesive film for metal terminal including a laminate including at least a resin layer A and a resin layer B, in which
the resin layer A has a melting peak temperature of 105°C or higher and 130°C or lower and the resin layer B has a cross-sectional hardness of 15 N/mm² or more as measured in an environment at a temperature of 110°C.

### ADVANTAGES OF THE INVENTION

According to the present disclosure, it is possible to provide an adhesive film for metal terminal which is interposed between a metal terminal that is electrically connected to an electrode of an electrical storage device element and an exterior material for electrical storage devices which seals the electrical storage device element, the adhesive film for metal terminal being capable of ensuring close contact between a metal terminal of an electrical storage device and a heat-sealable resin layer of the electrical storage device exterior material until the electrical storage device reaches a high temperature (for example, about 100°C to 130°C, preferably 110°C to 130°C, particularly preferably 120°C to 130°C), and unsealing the electrical storage device at the location of the adhesive film for metal terminal to release gas generated inside the electrical storage device to the outside when the electrical storage device reaches the high temperature. Further, an object of the present disclosure is to provide a method for manufacturing an adhesive film for metal terminal, a metal terminal with adhesive film for metal terminal, an electrical storage device, and a method for manufacturing the electrical storage device.

### BRIEF DESCRIPTION OF THE DRAWINGS

Fig. 1 is a schematic plan view of an electrical storage device of the present disclosure.
Fig. 2 is a schematic sectional view taken along line A-A' in Fig. 1.
Fig. 3 is a schematic sectional view taken along line B-B' in Fig. 1.
Fig. 4 is a schematic sectional view of an adhesive film for metal terminal according to the present disclosure.
Fig. 5 is a schematic diagram for illustrating an unsealing test method in an example.
Fig. 6 is a schematic sectional view of an exterior material for electrical storage devices according to the present disclosure.

### EMBODIMENTS OF THE INVENTION

An adhesive film for metal terminal according to the present disclosure is interposed between a metal terminal that is electrically connected to an electrode of an electrical storage device element and an exterior material for electrical storage devices which seals the electrical storage device element, the adhesive film for metal terminal including a laminate including at least a resin layer A and a resin layer B, in which the resin layer A has a melting peak temperature of 105°C or higher and 130°C or lower and the resin layer B has a cross-sectional hardness of 15 N/mm² or more as measured in an environment at a temperature of 110°C.

Since the adhesive film for metal terminal according to the present has the above-mentioned configuration, the adhesive film for metal terminal is capable of ensuring close contact between a metal terminal of an electrical storage device and a heat-sealable resin layer of the exterior material for electrical storage devices until the electrical storage device reaches a high temperature (for example, about 100°C to 130°C, preferably 110°C to 130°C, particularly preferably 120°C to 130°C), and unsealing the electrical storage device at the location of the adhesive film for metal terminal to release gas generated inside the electrical storage device to the outside when the electrical storage device reaches the high temperature (for example, about 100°C to 130°C, preferably 110°C to 130°C, particularly preferably 120°C to 130°C).

The electrical storage device according to the present disclosure is an electrical storage device including: an electrical storage device element including at least a positive electrode, a negative electrode and an electrolyte; an exterior material for electrical storage devices that seals the electrical storage device element; and a metal terminal electrically connected to each of the positive electrode and the negative electrode and protruding to the outside of the exterior material for electrical storage devices, in which the adhesive film for metal terminal according to the present disclosure is interposed between the metal terminal and the exterior material for electrical storage devices.

The present disclosure also provides an electrical storage device including an electrical storage device element including at least a positive electrode, a negative electrode and an electrolyte; an exterior material for electrical storage devices which seals the electrical storage device element; and a metal terminal electrically connected to each of the positive electrode and the negative electrode and protruding to outside of the exterior material for electrical storage devices, in which an adhesive film for metal terminal is interposed between the metal terminal and the exterior material for electrical storage devices, the adhesive film for metal terminal includes a laminate including at least a resin layer A and a resin layer B, and the electrical storage device is unsealed at a location where the resin layer A is laminated in the adhesive film for metal terminal in an environment at a temperature of 100°C or higher and 130°C or lower (that is, the electrical storage device is unsealed at the location of the resin layer A in the adhesive film for metal terminal in an environment at a temperature in the range of 100°C or higher and 130°C or lower).

Hereinafter, the adhesive film for metal terminal, the method for manufacturing the adhesive film for metal terminal, the electrical storage device and the method for manufacturing the electrical storage device according to the present disclosure will be described in detail.

For the numerical range in this specification, a numerical range indicated by the term "A to B" means "A or more" and "B or less". For example, the expression of "2 to 15 mm" means 2 mm or more and 15 mm or less.

### 1. Adhesive film for metal terminal

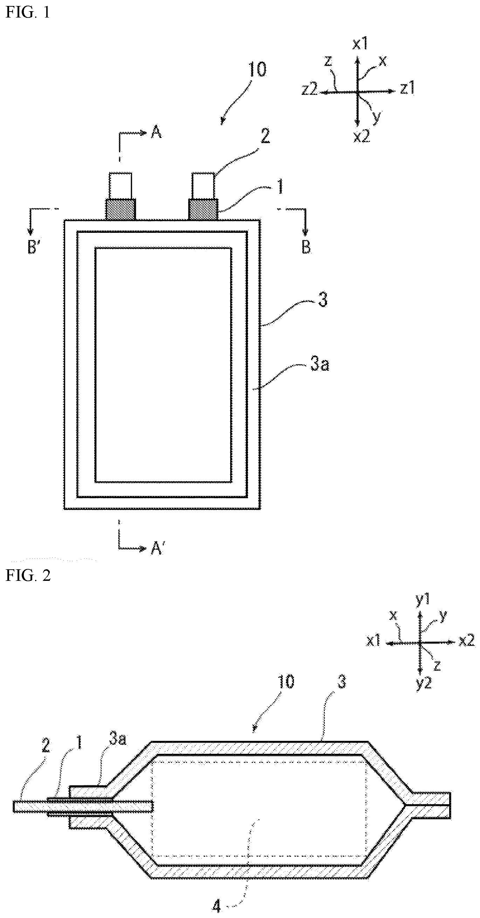

The adhesive film for metal terminal according to the present disclosure is interposed between a metal terminal electrically connected to an electrode of an electrical storage device element and an exterior material for electrical storage devices for sealing the electrical storage device element. Specifically, as shown in, for example, Figs. 1 to 3, an adhesive film 1 for metal terminal according to the present disclosure is interposed between a metal terminal 2 electrically connected to an electrode of an electrical storage device element 4 and an exterior material 3 for electrical storage devices for sealing the electrical storage device element 4. The metal terminal 2 protrudes to the outside of the exterior material 3 for electrical storage devices, and is sandwiched between the exterior materials 3 for electrical storage devices with the adhesive film 1 for metal terminal interposed between the metal terminal 2 and the exterior material 3 for electrical storage devices at a peripheral edge portion 3a of the heat-sealed exterior material 3 for electrical storage devices.

In the present disclosure, the step of temporarily bonding the adhesive film for metal terminal to a metal terminal is performed under the conditions of a temperature of, for example, about 140 to 160°C, a pressure of about 0.01 to 1.0 MPa, a time of about 3 to 15 seconds, and about 3 to 6 times, and the primary bonding step is performed under the conditions of, for example, a temperature of about 160 to 240°C, a pressure of about 0.01 to 1.0 MPa, a time of about 3 to 15 seconds, and about 1 to 3 times. In heat-sealing performed with the metal terminal with adhesive film for metal terminal interposed in the exterior material for electrical storage devices, the heating temperature is typically in the range of about 180 to 210°C, the pressure is typically about 1.0 to 2.0 MPa, the time is about 3 to 5 seconds, and the number of times of heat-sealing is about 1.

The adhesive film 1 for metal terminal according to the present disclosure is provided for enhancing adhesion between the metal terminal 2 and the exterior material 3 for electrical storage devices. Enhancement of adhesion between the metal terminal 2 and exterior material 3 for electrical storage devices improves the sealing property of the electrical storage device element 4. As described above, the electrical storage device element is sealed such that the metal terminal 2 electrically connected to the electrode of the electrical storage device element 4 protrudes to the outside of the exterior material 3 for electrical storage devices when the electrical storage device element 4 is heat-sealed. Here, the metal terminal 2 formed of metal and a heat-sealable resin layer 35 (a layer formed of a heat-sealable resin such as a polyolefin) located in the innermost layer of the exterior material 3 for electrical storage devices are formed of different materials, and therefore when such an adhesive film is not used, the sealing property of the electrical storage device element is likely to be low at the interface between the metal terminal 2 and the heat-sealable resin layer 35.

The adhesive film 1 for metal terminal according to the present invention includes a laminate including the resin layer A and the resin layer B. The resin layer A is preferably at least one of the outermost layers of adhesive film 1 for metal terminal. It is preferable that the resin layer B is not an outermost layer of the adhesive film 1 for metal terminal. The adhesive film 1 for metal terminal according to the present invention has a laminated configuration of two or more layers including at least the resin layer A and the resin layer B, preferably a laminated configuration of three or more layers.

The resin layer A is a layer formed of resin. Examples of the resin that forms the resin layer A include polyolefin-based resins, epoxy resins, acrylic resins, phenol resins, polycarbonate, and mixtures and copolymers thereof. Among them, polyolefin-based resins are particularly preferable.

The resin layer B is a layer formed of resin. Examples of the resin that forms the resin layer B include polyolefin-based resins, polyamide-based resins, polyester-based resins, epoxy resins, acrylic resins, fluororesins, silicone resins, phenol resins, silicon resins, polyurethane resins, polyether imide, polycarbonate, and mixtures and copolymers thereof. Among them, polyolefin-based resins are particularly preferable.

From the viewpoint of more suitably exhibiting the effect of the present disclosure, the thickness of the resin layer A is preferably about 10 µm or more, more preferably about 15 µm or more, still more preferably about 20 µm or more, and preferably about 60 µm or less, more preferably about 55 µm or less, still more preferably 50 µm or less, still more preferably 40 µm or less. The thickness of the resin layer A is preferably in the range of about 10 to 60 µm, about 10 to 55 µm, about 10 to 50 µm, about 10 to 40 µm, about 15 to 60 µm, about 15 to 55 µm, about 15 to 50 µm, about 15 to 40 µm, about 20 to 60 µm, about 20 to 55 µm, about 20 to 50 µm, or about 20 to 40 µm.

From the viewpoint of more suitably exhibiting the effect of the present disclosure, the thickness of the resin layer B is preferably 120 µm or less, more preferably 110 µm or less, still more preferably about 100 µm or less, still more preferably about 90 µm or less. In addition, the thickness of the resin layer A is preferably about 20 µm or more, more preferably about 30 µm or more, still more preferably about 40 µm or more. The thickness of the resin layer B is preferably in the range of 20 to 120 µm, about 20 to 110 µm, about 20 to 100 µm, about 20 to 90 µm, about 30 to 120 µm, about 30 to 110 µm, about 30 to 100 µm, about 30 to 90 µm, about 40 to 120 µm, about 40 to 110 µm, about 40 to 100 µm, or about 40 to 90 µm.

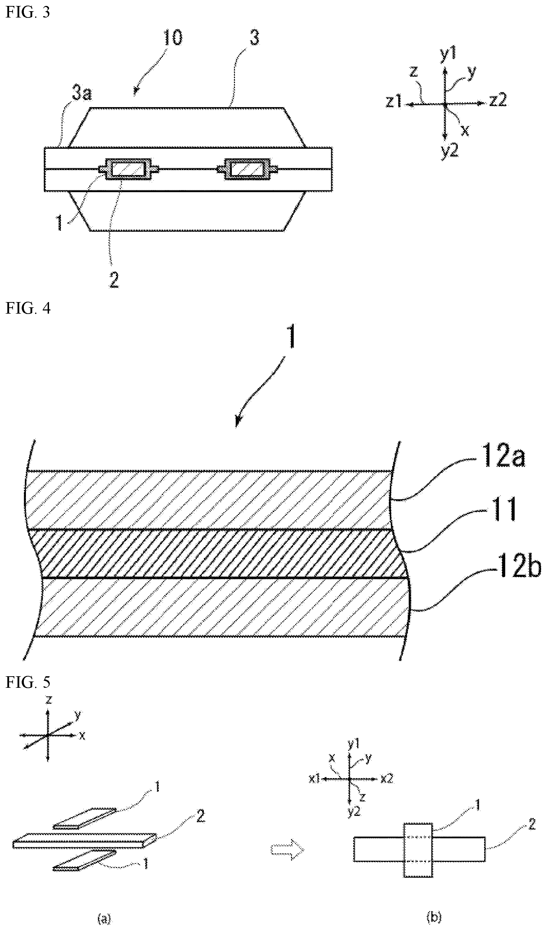

For example, as shown in Fig. 4, the adhesive film 1 for metal terminal according to the present disclosure may have a configuration in which at least a first polyolefin layer 12a, a base material 11 and a second polyolefin layer 12b are laminated in the stated order. In such a configuration, at least one of the first polyolefin layer 12a and the second polyolefin layer 12b is preferably the resin layer A. The base material 11 is preferably the resin layer B. The first polyolefin layer 12a is disposed on the metal terminal 2 side. In addition, the second polyolefin layer 12b is disposed on the side of the exterior material 3 for electrical storage devices. The first polyolefin layer 12a and the second polyolefin layer 12b are located, respectively, on surfaces on both sides in the adhesive film 1 for metal terminal according to the present disclosure.

Hereinafter, the adhesive film 1 for metal terminal according to the present disclosure will be described in detail by taking as an example a case where at least one of the first polyolefin layer 12a and the second polyolefin layer 12b is the resin layer A and the base material 11 is the resin layer B in the adhesive film 1 for metal terminal according to the present disclosure.

From the viewpoint of more suitably exhibiting the effect of the present invention, it is preferable that surfaces of the first polyolefin layer 12a and the base material 11 are in contact with each other, and surfaces of the second polyolefin layer 12b and the base material 11 are in contact with each other.

In the adhesive film 1 for metal terminal according to the present disclosure, the first polyolefin layer 12a and the second polyolefin layer 12b each contain a polyolefin-based resin. Examples of the polyolefin-based resin include polyolefins and acid-modified polyolefins. It is preferable that the first polyolefin layer 12a contains an acid-modified polyolefin, among polyolefin-based resins, and it is more preferable that the first polyolefin layer 12a is a layer formed of an acid-modified polyolefin. It is preferable that the second polyolefin layer 12b contains a polyolefin or an acid-modified polyolefin, more preferably a polyolefin, among polyolefin-based resins, and it is still more preferable that the second polyolefin layer 12b is a layer formed of a polyolefin.

It is preferable that the base material 11 contains a polyolefin-based resin (the base material 11 has a polyolefin backbone), more preferably a polyolefin, and it is still more preferable that the base material 11 is a layer formed of a polyolefin.

In each of the first polyolefin layer 12a, the second polyolefin layer 12b and the base material 11, the polyolefin-based resin is preferably a polypropylene-based resin. The polyolefin is preferably polypropylene, and the acid-modified polyolefin is preferably acid-modified polypropylene. The polyolefin-based resin such as a polyolefin and an acid-modified polyolefin may contain known additives, fillers described later, pigments, and the like.

Specific examples of the preferred laminated configuration of the adhesive film 1 for metal terminal according to the present disclosure include a three-layer configuration in which a first polyolefin layer formed of acid-modified polypropylene, a base material formed of polypropylene and a second polyolefin layer formed of acid-modified polypropylene are laminated in the stated order; and a three-layer configuration in which a first polyolefin layer formed of acid-modified polypropylene, a base material formed of polypropylene and a second polyolefin layer formed of polypropylene are laminated in the stated order. Among them, the latter, i.e., a three-layered configuration is preferable from the viewpoint of bondability between the heat-sealable resin layer 35 of the exterior material 3 for electrical storage devices and the second polyolefin layer 12b.

Materials forming the first polyolefin layer 12a, the second polyolefin layer 12b and the base material 11 will be described later in detail.

When the adhesive film 1 for metal terminal according to the present disclosure is disposed between the metal terminal 2 of the electrical storage device 10 and the exterior material 3 for electrical storage devices, the surface of the metal terminal 2 composed of metal and the heat-sealable resin layer 35 (a layer formed of a heat-sealable resin such as a polyolefin) of the exterior material 3 for electrical storage devices are bonded to each other with the adhesive film 1 for metal terminal interposed therebetween. The first polyolefin layer 12a of the adhesive film 1 for metal terminal is disposed on the metal terminal 2 side, the second polyolefin layer 12b is disposed on the side of the exterior material 3 for electrical storage devices, the first polyolefin layer 12a adheres to the metal terminal 2, and the second polyolefin layer 12b adheres to the heat-sealable resin layer 35 of the exterior material 3 for electrical storage devices.

In the adhesive film 1 for metal terminal according to the present disclosure, the base material 11 has a cross-sectional hardness of 15 N/mm² or more as measured in an environment at a temperature of 110°C, and at least one of the first polyolefin layer 12a and the second polyolefin layer 12b has a melting peak temperature of 105°C or higher and 130°C or lower. From the viewpoint that in the adhesive film for metal terminal according to the present disclosure, the metal terminal of the electrical storage device and the heat-sealable resin layer of the exterior material for electrical storage devices are brought into close contact with each other, and the electrical storage device is unsealed at the location of the adhesive film for metal terminal to release gas generated inside the electrical storage device to outside when the electrical storage device reaches a high temperature (for example, about 100°C to 130°C, preferably 110°C to 130°C, particularly preferably 120°C to 130°C), the electrical storage device can be unsealed from at least one of the first polyolefin layer 12a and the second polyolefin layer 12b when the at least one layer has a melting peak temperature of 105°C or higher and 130°C or lower. Note that as described later, if the cross-sectional hardness of the base material 11 at 110°C is lower than 15 N/mm², it is difficult to unseal the electrical storage device at the location of the adhesive film for metal terminal when the electrical storage device reaches a high temperature even though at least one of the first polyolefin layer 12a and the second polyolefin layer 12b has a melting peak temperature of 105°C or higher and 130°C or lower. This may be because if the cross-sectional hardness of the base material 11 in an environment at 110°C is low, not only the first polyolefin layer 12a and the second polyolefin layer 12b of the adhesion film for metal terminal but also the base material 11 and the heat-sealable resin layer 35 of the exterior material for electrical storage devices are melted and the first polyolefin layer 12a and the second polyolefin layer 12b are mixed with the base material layer 11 in the step of heat-sealing the exterior material for electrical storage devices and the metal terminal with adhesive film for metal terminal at the peripheral edge portion 3a, so that the heat resistance of the sealed portion increases, and it is difficult to perform unsealing. For setting the cross-sectional hardness of the base material 11 at an environmental temperature of 110°C to about 15 N/mm² or more, the resin used for forming the base material 11 is preferably homopolypropylene or block polypropylene in the case of a polyolefin-based resin, and preferably polyethylene terephthalate or polyethylene naphthalate in the case of a polyester-based resin, and it is also preferable to use engineering plastic. The molecular weight, crystallinity, and density of the resin are preferably large. In the present disclosure, a method for measuring the cross-sectional hardness of the base material and a method for measuring the melting peak temperature are as follows.

### <Measurement of cross-sectional hardness of resin layer B>

The martens hardness is adopted as the cross-sectional hardness of the resin layer B (for example, base material). An adhesive film for metal terminal is cut into a size of 1.5 cm × 5 mm, embedded in a heat-resistant thermosetting epoxy resin, and polished together with the epoxy resin to expose a cross section, thereby obtaining a measurement sample. Next, a heating stage is installed on an ultra-microhardness tester equipped with a Vickers indenter (for example, HM 2000 manufactured by Fischer Instruments K.K.), and the cross-section sample is set on the stage, and heated for 5 minutes until the sample reaches 110°C. Next, against the center of the resin layer B (base material) which is a layer to be measured in the measurement sample, the indenter is pressed to a depth of 1 µm at a pressing rate of 0.1 µm/s to measure the cross-sectional hardness of the resin layer B. The measurement is performed 10 times, and an average value thereof is adopted as a measured value.

### <Measurement of melting peak temperature>

For each measurement sample, the melting peak temperature is measured in accordance with the provisions of JIS K 7121: 2012 (Testing Methods for Transition Temperatures of Plastics (Amendment 1 of JIS K 7121: 1987)). The measurement is performed with a differential scanning calorimeter (DSC, for example, Differential Scanning Calorimeter Q200 manufactured by TA Instruments). The measurement sample is held at -50°C for 15 minutes, then heated from -50°C to 210°C at a temperature rise rate of 10°C/min to measure the first melting peak temperature P (°C), and then held at 210°C for 10 minutes. Next, the measurement sample is cooled from 210°C to -50°C at a temperature lowering rate of 10°C/min, and held for 15 minutes. Further, the second melting peak temperature Q (°C) is measured by heating the measurement sample from -50°C to 210°C at a temperature rise rate of 10°C/min. The flow rate of the nitrogen gas is set to 50 ml/min. In accordance with the above procedure, the first measured melting peak temperature P (°C) and the second measured melting peak temperature Q (°C) are determined. In accordance with the above procedure, the value of the first measured melting peak temperature P (°C) is adopted.

From the viewpoint of more suitably exhibiting the effect of the present disclosure, the cross-sectional hardness of the resin layer B in an environment at a temperature of 110°C is preferably about 20 N/mm² or more, more preferably about 25 N/mm² or more, still more preferably about 30 N/mm² or more. From the same viewpoint, the cross-sectional hardness is preferably about 60 N/mm² or less, more preferably about 50 N/mm² or less, still more preferably about 45 N/mm² or less. The cross-sectional hardness is preferably in the range of about 15 to 60 N/mm², about 15 to 50 N/mm², about 15 to 45 N/mm², about 20 to 60 N/mm², about 20 to 50 N/mm², about 20 to 45 N/mm², about 25 to 60 N/mm², about 25 to 50 N/mm², about 25 to 45 N/mm², about 30 to 60 N/mm², about 30 to 50 N/mm², or about 30 to 45 N/mm². The same applies to the cross-sectional hardness of the base material 11 when the base material 11 is the resin layer B.

From the viewpoint of more suitably exhibiting the effect of the present disclosure, the melting peak temperature of the resin layer B is, for example, about 135°C or higher, preferably about 150°C or higher, more preferably about 155°C or higher, still more preferably about 160°C or higher, still more preferably about 163°C or higher. From the same viewpoint, the melting peak temperature of the base material 11 is preferably about 180°C or lower, more preferably about 175°C or lower, still more preferably about 170°C or lower. The melting peak temperature is preferably in the range of about 135 to 180°C, about 135 to 175°C, about 135 to 170°C, about 150 to 180°C, about 150 to 175°C, about 150 to 170°C, about 155 to 180°C, about 155 to 175°C, about 155 to 170°C, about 160 to 180°C, about 160 to 175°C, about 160 to 170°C, about 163 to 180°C, about 163 to 175°C, or about 163 to 170°C. The same applies to the melting peak temperature of the base material 11 when the base material 11 is the resin layer B.

From the viewpoint of more suitably exhibiting the effect of the present disclosure, the melting peak temperature of the resin layer A is preferably 110°C or higher, more preferably about 115°C or higher, still more preferably about 120°C or higher. From the viewpoint, the melting peak temperature is about 130°C or lower, preferably about 128°C or lower, more preferably about 125°C or lower. The melting peak temperature is preferably in the range of about 105 to 130°C, about 105 to 128°C, about 105 to 125°C, about 110 to 130°C, about 110 to 128°C, about 110 to 125°C, about 115 to 130°C, about 115 to 128°C, about 115 to 125°C, about 120 to 130°C, about 120 to 128°C, or about 120 to 125°C. However, as described above, when the first polyolefin layer 12a disposed on the metal terminal 2 side is the resin layer A, the first polyolefin layer 12a has a melting peak temperature of 105°C or higher and 130°C or lower. Similarly, when the second polyolefin layer 12b disposed on the side of the exterior material 3 for electrical storage devices is the resin layer A, the second polyolefin layer 12b has a melting peak temperature of 105°C or higher and 130°C or lower.

It is also preferable that the melting peak temperature of the second polyolefin layer 12b is 130°C or higher. As will be described later, since the melting peak temperature of the first polyolefin layer 12a disposed on the metal terminal 2 side is 105°C or higher and 130°C or lower, and the melting peak temperature of the second polyolefin layer 12b disposed on the side of the exterior material 3 for electrical storage devices and the melting peak temperature of the heat-sealable resin layer 35 of the exterior material 3 for electrical storage devices are 130°C or higher, it is possible to ensure close contact between a metal terminal of an electrical storage device and a heat-sealable resin layer of the exterior material for electrical storage devices until the electrical storage device reaches a high temperature (for example, about 100°C to 130°C, preferably 110°C to 130°C, particularly preferably 120°C to 130°C) and to unseal the electrical storage device at the location of the adhesive film for metal terminal to release gas generated inside the electrical storage device to the outside when the electrical storage device reaches the high temperature (for example, about 100°C to 130°C, preferably 110°C to 130°C, particularly preferably 120°C to 130°C). In such an aspect, the melting peak temperature of the second polyolefin layer 12b is preferably 130 to 150°C.

From the viewpoint of suitably exhibiting the effect of the present disclosure, the total thickness of the adhesive film 1 for metal terminal is, for example, about 60 µm or more, preferably about 70 µm or more, more preferably about 80 µm or more. In addition, the total thickness of the adhesive film 1 for metal terminal according to the present disclosure is preferably about 150 µm or less, more preferably about 120 µm or less, still more preferably about 100 µm or less. The total thickness of the adhesive film 1 for metal terminal according to the present disclosure is preferably in the range of about 60 to 150 µm, about 60 to 130 µm, about 60 to 100 µm, about 70 to 150 µm, about 70 to 130 µm, about 70 to 100 µm, about 80 to 150 µm, about 80 to 130 µm, and about 80 to 100 µm.

It is preferable that the adhesive film 1 for metal terminal according to the present disclosure has fine irregularities on at least one surface of the outermost layer. This enables further improvement of adhesion to the heat-sealable resin layer 35 of the exterior material 3 for electrical storage devices or the metal terminal 2. Examples of the method for forming fine irregularities on the surface of an outermost layer of the adhesive film 1 for metal terminal include a method in which an additive such as fine particles is added to the outermost layer; and a method in which a cooling roll having irregularities on a surface thereof is abutted against a surface of the heat-sealable resin layer to give a shape. The fine irregularities are preferably those in which the ten-point average roughness of the surface of the outermost layer is preferably about 0.1 µm or more, more preferably about 0.2 µm or more, and preferably about 35 µm or less, more preferably about 10 µm or less, and is preferably in the range of about 0.1 to 35 µm, about 0.1 to 10 µm, about 0.2 to 35 µm, about 0.2 to 35 µm, or about 0.2 to 10 µm. The ten-point average roughness is a value obtained by performing measurement under conditions of an objective lens magnification of 50 and no cutoff using Laser Microscope VK-9710 manufactured by KEYENCE CORPORATION in a method conforming to JIS B0601: 1994.

Hereinafter, the materials for forming the first polyolefin layer 12a, the second polyolefin layer 12b and the base material 11, and the thicknesses thereof will be described in detail.

### [First polyolefin layer 12a and second polyolefin layer 12b]

As shown in Fig. 4, the adhesive film 1 for metal terminal according to the present disclosure includes the first polyolefin layer 12a on one side of the base material 11 and the second polyolefin layer 12b on the other side of the base material 11. The first polyolefin layer 12a is disposed on the metal terminal 2 side. In addition, the second polyolefin layer 12b is disposed on the side of the exterior material 3 for electrical storage devices. The first polyolefin layer 12a and the second polyolefin layer 12b are located, respectively, on surfaces on both sides in the adhesive film 1 for metal terminal according to the present disclosure.

In the present disclosure, the melting peak temperature of at least one of the first polyolefin layer 12a and the second polyolefin layer 12b is 105°C or higher and 130°C or lower. From the viewpoint that in the adhesive film 1 for metal terminal according to the present disclosure, the metal terminal 2 of the electrical storage device and the heat-sealable resin layer 35 of the exterior material 3 for electrical storage devices are brought into close contact with each other, and the electrical storage device is unsealed at the location of the adhesive film for metal terminal to release gas generated inside the electrical storage device to outside when the electrical storage device reaches a high temperature (for example, about 100°C to 130°C, 110 to 130°C, or 120°C to 130°C), the electrical storage device can be unsealed from the first polyolefin layer 12a or the second polyolefin layer 12b that has a melting peak temperature of 105°C or higher and 130°C or lower when at least one of the first polyolefin layer 12a or the second polyolefin layer 12b has a melting peak temperature of 105°C or higher and 130°C or lower. The melting temperature of the polyolefin can be adjusted by copolymerizing propylene and ethylene. Normally, random copolymerization of ethylene with propylene at 5% by mass or less can lower the melting peak temperature to about 130°C. Polypropylene having a melting point of about 100°C can be prepared by using a method described in Japanese Translation of PCT International Patent Application No. 2016-524002.

In the adhesive film 1 for metal terminal according to the present disclosure, the first polyolefin layer 12a and the second polyolefin layer 12b each contain a polyolefin-based resin. Examples of the polyolefin-based resin include polyolefins and acid-modified polyolefins. It is preferable that the first polyolefin layer 12a contains an acid-modified polyolefin, among polyolefin-based resins, and it is more preferable that the first polyolefin layer 12a is a layer formed of an acid-modified polyolefin. It is preferable that the second polyolefin layer 12b contains a polyolefin or an acid-modified polyolefin, more preferably a polyolefin, among polyolefin-based resins, and it is still more preferable that the second polyolefin layer 12b is a layer formed of a polyolefin or an acid-modified polyolefin. The acid-modified polyolefin has high affinity for a metal. In addition, the polyolefin and the acid-modified polyolefin have high affinity for a heat-weldable resin such as a polyolefin. Therefore, in the adhesive film 1 for metal terminal according to the present disclosure, further excellent adhesion can be exhibited at an interface between the adhesive film 1 for metal terminal and the metal terminal 2 by disposing the first polyolefin layer 12a formed of an acid-modified polyolefin on the metal terminal 2 side. In addition, further excellent adhesion can be exhibited at an interface between the adhesive film 1 for metal terminal and the heat-sealable resin layer 35 by disposing the second polyolefin layer 12b formed of a polyolefin or an acid-modified polyolefin on the heat-sealable resin layer 35 side of the exterior material 3 for electrical storage devices.

As described above, specific examples of the preferred laminated configuration of the adhesive film 1 for metal terminal according to the present disclosure include a three-layer configuration in which a first polyolefin layer formed of acid-modified polypropylene, a base material formed of polypropylene and a second polyolefin layer formed of acid-modified polypropylene are laminated in the stated order; and a three-layer configuration in which a first polyolefin layer formed of acid-modified polypropylene, a base material formed of polypropylene and a second polyolefin layer formed of polypropylene are laminated in the stated order. Among them, the latter, i.e., a three-layered configuration is preferable from the viewpoint of bondability between the heat-sealable resin layer 35 of the exterior material 3 for electrical storage devices and the second polyolefin layer 12b.

The acid-modified polyolefin is not particularly limited as long as it is a polyolefin modified with an acid, and a polyolefin graft-modified with an unsaturated carboxylic acid or an anhydride thereof is preferable.

Specific examples of the polyolefin to be acid-modified include polyethylenes such as low-density polyethylene, medium-density polyethylene, high-density polyethylene and linear low-density polyethylene; crystalline or noncrystalline polypropylene such as homopolypropylene, block copolymers of polypropylene (e.g., block copolymers of propylene and ethylene) and random copolymers of polypropylene (e.g., random copolymers of propylene and ethylene); terpolymers of ethylene-butene-propylene; and the like. Among these polyolefins, polyethylenes and polypropylene are preferable, with polypropylene being particularly preferable.

The polyolefin modified with an acid may be a cyclic polyolefin. For example, the carboxylic acid-modified cyclic polyolefin is a polymer obtained by performing copolymerization with an α,β-unsaturated carboxylic acid or an anhydride thereof replacing a part of monomers that form the cyclic polyolefin, or by block-polymerizing or graft-polymerizing an α,β-unsaturated carboxylic acid or an anhydride thereof with the cyclic polyolefin.

The cyclic polyolefin modified with an acid is a copolymer of an olefin and a cyclic monomer, and examples of the olefin as a constituent monomer of the cyclic polyolefin include ethylene, propylene, 4-methyl-1-pentene, butadiene and isoprene. Examples of the cyclic monomer as a constituent monomer of the cyclic polyolefin include cyclic alkenes such as norbornene, specifically cyclic dienes such as cyclopentadiene, dicyclopentadiene, cyclohexadiene and norbornadiene. Among these polyolefins, cyclic alkenes are preferable, and norbornene is further preferable. Examples of the constituent monomer include styrene.

Examples of the carboxylic acid or anhydride thereof which is used for acid modification include maleic acid, acrylic acid, itaconic acid, crotonic acid, maleic anhydride and itaconic anhydride. It is preferable that a peak derived from maleic anhydride is detected when the first polyolefin layer 12a is analyzed by infrared spectroscopy. For example, when a maleic anhydride-modified polyolefin is measured by infrared spectroscopy, peaks derived from maleic anhydride are detected near wavenumbers of 1760 cm⁻¹ and 1780 cm⁻¹. When the first polyolefin layer 12a or the second polyolefin layer 12b is a layer formed of a maleic anhydride-modified polyolefin, a peak derived from maleic anhydride is detected when measurement is performed by infrared spectroscopy. However, if the degree of acid modification is low, the peaks may be too small to be detected. In that case, the peaks can be analyzed by nuclear magnetic resonance spectroscopy.

The first polyolefin layer 12a and the second polyolefin layer 12b may be each formed from one resin component alone, or may be formed from a blend polymer obtained by combining two or more resin components. Further, the first polyolefin layer 12a and the second polyolefin layer 12b may be each formed of only one layer, but may be formed of two or more layers with the same resin component or different resin components. From formability of the first polyolefin layer 12a and the second polyolefin layer 12b, it is preferable that these layers are each formed from a blend polymer obtained by combining two or more resin components. When formed from the blend polymer, it is preferable that the first polyolefin layer 12a contains acid-modified polypropylene as a main component (component contained at 50 mass% or more), and other resins at 50 mass% or less (polyethylene is preferable from the viewpoint of improving flexibility). In addition, it is preferable that the second polyolefin layer 12b contains polypropylene as a main component (component contained at 50 mass% or more), and other resins at 50 mass% or less (polyethylene is preferable from the viewpoint of improving flexibility). On the other hand, from the viewpoint of the electrolytic solution resistance of the first polyolefin layer 12a and the second polyolefin layer 12b, it is preferable that the first polyolefin layer 12a contains acid-modified polypropylene alone as a resin, and it is preferable that the second polyolefin layer 12b contains acid-modified polypropylene or polypropylene alone as a resin.

Further, the first polyolefin layer 12a and the second polyolefin layer 12b may each contain a filler if necessary. When the first polyolefin layer 12a and the second polyolefin layer 12b contain a filler, a short circuit between the metal terminal 2 and a barrier layer 33 of the exterior material 3 for electrical storage devices can be effectively suppressed because the filler functions as a spacer. The particle size of the filler is in the range of about 0.1 to 35 µm, preferably about 5.0 to 30 µm, more preferably about 10 to 25 µm. In addition, the contents of the fillers based on 100 parts by mass of resin components forming the first polyolefin layer 12a and the second polyolefin layer 12b, respectively, are each about 5 to 30 parts by mass, more preferably about 10 to 20 parts by mass.

As the filler, either an inorganic filler or an organic filler can be used. Examples of the inorganic filler include carbon (carbon, graphite), silica, aluminum oxide, barium titanate, iron oxide, silicon carbide, zirconium oxide, zirconium silicate, magnesium oxide, titanium oxide, calcium aluminate, calcium hydroxide, aluminum hydroxide, magnesium hydroxide and calcium carbonate. In addition, examples of the organic filler include fluororesins, phenol resins, urea resins, epoxy resins, acrylic resins, benzoguanamine-formaldehyde condensates, melamine-formaldehyde condensates, crosslinked products of polymethyl methacrylate, and crosslinked products of polyethylene. From the viewpoint of shape stability, rigidity and content resistance, aluminum oxide, silica, fluororesins, acrylic resins and benzoguanamine-formaldehyde condensates are preferable, and among them, spherical aluminum oxide and silica are more preferable. As a method for mixing the filler with resin components that form the first polyolefin layer 12a and the second polyolefin layer 12b, a method in which a masterbatch formed by melting and blending the resin components and the filler with a Banbury mixer or the like is adjusted to a predetermined mixing ratio; a method in which the filler is directly mixed with the resin components; or the like can be adopted.

In addition, the first polyolefin layer 12a and the second polyolefin layer 12b may each contain a pigment if necessary. As the pigment, various inorganic pigments can be used. As a specific example of the pigment, carbon (carbon, graphite) exemplified as the filler can be preferably exemplified. Carbon (carbon, graphite) is a material generally used inside an electrical storage device, and there is no possibility of being dissolved in an electrolytic solution. In addition, the carbon has a high coloring effect, allows a sufficient coloring effect to be obtained with an addition amount small enough not to hinder bondability, is not melted by heat, and is capable of increasing the apparent melt viscosity of the resin added. Further, it is possible to impart an excellent sealing property between the exterior material for electrical storage devices and the metal terminal by preventing a pressed portion from being thinned during thermal bonding (heat-sealing).

When a pigment is added to each of the first polyolefin layer 12a and the second polyolefin layer 12b, for example, the addition amounts of the pigments based on 100 parts by mass of resin components forming the first polyolefin layer 12a and the second polyolefin layer 12b, respectively, are each about 0.05 to 0.3 parts by mass, preferably about 0.1 to 0.2 parts by mass, when carbon black having a particle size of about 0.03 µm is used. By adding a pigment to the first polyolefin layer 12a and the second polyolefin layer 12b, the presence or absence of the adhesive film 1 for metal terminal can be detected by a sensor, or can be visually inspected. When a filler and a pigment are added to the first polyolefin layer 12a and the second polyolefin layer 12b, the filler and the pigment may be added to the first polyolefin layer 12a and the second polyolefin layer 12b identically, and from the viewpoint of ensuring that the heat-weldability of the adhesive film 1 for metal terminal, it is preferable that the filler and the pigment are added separately between the first polyolefin layer 12a and the second polyolefin layer 12b.

From the viewpoint of more suitably exhibiting the effect of the present disclosure, the thickness of each of the first polyolefin layer 12a and the second polyolefin layer 12b is preferably about 10 µm or more, more preferably about 15 µm or more, still more preferably about 20 µm or more, and preferably about 60 µm or less, more preferably about 55 µm or less, still more preferably 50 µm or less, still more preferably 40 µm or less. The thicknesses of each of the first polyolefin layer 12a and the second polyolefin layer 12b is preferably in the range of about 10 to 60 µm, about 10 to 55 µm, about 10 to 50 µm, about 10 to 40 µm, about 15 to 60 µm, about 15 to 55 µm, about 15 to 50 µm, about 15 to 40 µm, about 20 to 60 µm, about 20 to 55 µm, about 20 to 50 µm, or about 20 to 40 µm.

From the same viewpoint, the ratio of the thickness of the base material 11 to the total thickness of the first polyolefin layer 12a and the second polyolefin layer 12b is preferably about 0.3 or more, more preferably about 0.4 or more, and preferably about 1.0 or less, more preferably about 0.8 or less, and is preferably in the range of about 0.3 to 1.0, about 0.3 to 0.8, about 0.4 to 1.0, or about 0.4 to 0.8.

When the total thickness of the adhesive film 1 for metal terminal is 100%, the ratio of the total thickness of the first polyolefin layer 12a and the second polyolefin layer 12b is preferably about 30 to 80%, more preferably about 50 to 70%.

### [Base material 11]

In the adhesive film 1 for metal terminal, the base material 11 is a layer that functions as a support for the adhesive film 1 for metal terminal.

The base material 11 has the cross-sectional hardness described above.

The material that forms the base material 11 is not particularly limited as long as it has an insulation quality. Examples of the material that forms the base material 11 include polyolefin-based resins, polyamide-based resins, polyester-based resins, epoxy resins, acrylic resins, fluororesins, silicone resins, phenol resins, silicon resins, polyurethane resins, polyether imide, polycarbonate, and mixtures and copolymers thereof. Among them, polyolefin-based resins are particularly preferable. That is, the material that forms the base material 11 is preferably a resin containing a polyolefin backbone such as a polyolefin or an acid-modified polyolefin. The resin forming the base material 11 can be confirmed to contain a polyolefin backbone by an analysis method such as infrared spectroscopy or gas chromatography mass spectrometry.

As described above, it is preferable that the base material 11 contains a polyolefin-based resin, more preferably a polyolefin, and it is still more preferable that the base material 11 is a layer formed of a polyolefin. The layer formed of polyolefin may be a stretched polyolefin film or an unstretched polyolefin film, and is preferably an unstretched polyolefin film. Specific examples of the polyolefin include polyethylene such as low-density polyethylene, medium-density polyethylene, high-density polyethylene and linear low-density polyethylene; crystalline or noncrystalline polypropylene such as homopolypropylene, block copolymers of polypropylene (e.g. block copolymers of propylene and ethylene) and random copolymers of polypropylene (e.g. random copolymers of propylene and ethylene); terpolymers of ethylene-butene-propylene; and the like. Among these polyolefins, polyethylenes and polypropylene are preferred, with polypropylene being more preferred. In addition, it is preferable that the base material 11 contains homopolypropylene, it is more preferable that the base material 11 is formed of homopolypropylene and it is still more preferable that the base material is an unstretched homopolypropylene film because excellent electrolytic solution resistance is obtained.

Specific examples of the polyamide include aliphatic polyamides such as nylon 6, nylon 66, nylon 610, nylon 12, nylon 46, and copolymers of nylon 6 and nylon 66; hexamethylenediamine-isophthalic acid-terephthalic acid copolymerization polyamides containing a structural unit derived from terephthalic acid and/or isophthalic acid, such as nylon 6I, nylon 6T, nylon 6IT and nylon 6I6T (I denotes isophthalic acid and T denotes terephthalic acid), and polyamides containing aromatics, such as polymethaxylylene adipamide (MXD6); cycloaliphatic polyamides such as polyaminomethyl cyclohexyl adipamide (PACM 6); polyamides copolymerized with a lactam component or an isocyanate component such as 4,4'-diphenylmethane-diisocyanate, and polyester amide copolymers and polyether ester amide copolymers as copolymers of a copolymerization polyamide and a polyester or a polyalkylene ether glycol; and copolymers thereof. These polyamides may be used alone, or may be used in combination of two or more thereof.

Specific examples of the polyester include polyethylene terephthalate, polybutylene terephthalate, polyethylene naphthalate, polybutylene naphthalate, polyethylene isophthalate, copolymerization polyesters with ethylene terephthalate as a main repeating unit, and copolymerization polyesters with a butylene terephthalate as a main repeating unit. Specific examples of the copolymerization polyester including ethylene terephthalate as a main repeating unit include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/isophthalate), polyethylene(terephthalate/adipate), polyethylene(terephthalate/sodium sulfoisophthalate), polyethylene(terephthalate/sodium isophthalate), polyethylene (terephthalate/phenyl-dicarboxylate) and polyethylene(terephthalate/decane dicarboxylate). Specific examples of the copolymerization polyester with butylene terephthalate as a main repeating unit include copolymer polyesters that are polymerized with butylene isophthalate and include butylene terephthalate as a main repeating unit (hereinafter, abbreviated as follows after polybutylene(terephthalate/isophthalate)), polybutylene(terephthalate/adipate), polybutylene(terephthalate/sebacate), polybutylene(terephthalate/decane dicarboxylate) and polybutylene naphthalate. These polyesters may be used alone, or may be used in combination of two or more thereof.

In addition, the base material 11 may be formed of a nonwoven fabric formed of any of the resins described above. When the base material 11 is a nonwoven fabric, it is preferable that the base material 11 is composed of the above-described polyolefin-based resin, polyamide resin or the like.

The base material 11 may be a single layer, or may have multiple layers. When the base material 11 has multiple layers, at least one layer may be the layer having a melting peak temperature of 135°C or higher. Specific examples of the layer having multiple layers include those having a three-layered configuration in which block polypropylene, homopolypropylene and block polypropylene are laminated in the stated order.

In addition, a colorant can be blended into the base material 11 so that the base material 11 is a layer containing a colorant. In addition, the light transmittance can be adjusted by selecting a resin having low transparency. When the base material 11 is a film, it is also possible to use a colored film or a film having low transparency. In addition, when the base material 11 is a nonwoven fabric, it is possible to use a nonwoven fabric using fibers or a binder containing a colorant, or a nonwoven fabric having low transparency.

When the base material 11 is composed of a resin film, a surface of the base material 11 may be subjected to known easy-adhesive means such as corona discharge treatment, ozone treatment or plasma treatment if necessary.

From the viewpoint of more suitably exhibiting the effect of the present disclosure, the thickness of the base material 11 is preferably 120 µm or less, more preferably 110 µm or less, still more preferably about 100 µm or less, still more preferably about 90 µm or less. In addition, the thickness of the base material 11 is preferably about 20 µm or more, more preferably about 30 µm or more, still more preferably about 40 µm or more. The thickness of the base material 11 is preferably in the range of 20 to 120 µm, about 20 to 110 µm, about 20 to 100 µm, about 20 to 90 µm, about 30 to 120 µm, about 30 to 110 µm, about 30 to 100 µm, about 30 to 90 µm, about 40 to 120 µm, about 40 to 110 µm, about 40 to 100 µm, or about 40 to 90 µm.

The adhesive film 1 for metal terminal according to the present disclosure can be manufactured by, for example, laminating the first polyolefin layer 12a and the second polyolefin layer 12b on both surfaces, respectively, of the base material 11. The base material 11 can be laminated to the first polyolefin layer 12a and the second polyolefin layer 12b by a known method such as an extrusion lamination method, a T-die method, an inflation method or a thermal lamination method.

The method for interposing the adhesive film 1 for metal terminal between the metal terminal 2 and the exterior material 3 for electrical storage devices is not particularly limited, and for example, as shown in Figs. 1 to 3, the adhesive film 1 for metal terminal may be wound around the metal terminal 2 at a portion where the metal terminal 2 is sandwiched between the exterior materials 3 for electrical storage devices. In addition, the adhesive film 1 for metal terminal may be disposed on both sides of the metal terminal 2 so as to cross the two metal terminals 2 in a portion where the metal terminal 2 is sandwiched between the exterior materials 3 for electrical storage devices.

It is preferable that the adhesive film 1 of the present disclosure is unsealed at 120°C or higher and 130°C or lower in terms of a test sample in <Unsealing test method> below.

### <Unsealing test method>

An aluminum plate having a width of 4 mm, a thickness of 70 µm and a length of 40 mm is used as a metal terminal. The adhesive film for metal terminal is cut into a size of 1 cm in length and 1 cm in width. Next, as shown in the schematic diagram of Fig. 5, the metal terminal is sandwiched between two adhesive films for metal terminal in such a manner that the adhesive film for metal terminal and the long side of the metal terminal are orthogonal to each other, and the adhesive film for metal terminal is heat-sealed to the metal terminal under the conditions of a pressure of 0.2 MPa, a temperature of 180°C and a time of 3 seconds to obtain a metal terminal with an adhesive film for metal terminal. An exterior material for electrical storage devices with a total thickness of 121 µm, in which a base material layer (PET (thickness: 12 µm)/adhesive (thickness: 2 µm)/nylon (thickness: 15 µm)), an adhesive agent layer (thickness: 2 µm), a barrier layer (aluminum alloy foil having a thickness of 40 µm)/an adhesive layer (maleic anhydride-modified polypropylene having a thickness of 25 µm) and a heat-sealable resin layer (polypropylene having a melting peak temperature of 150°C and a thickness of 25 µm) are laminated in the stated order, is prepared, and cut into a size of 8 cm × 19 cm. Next, two metal terminals with adhesive film for metal terminal are placed at an interval of 2 cm on the short side of the exterior material for electrical storage devices, and the long side of the exterior material for electrical storage devices is folded. Next, the short side on which the metal terminal with adhesive film for metal terminal is disposed is heat-sealed under the conditions of a pressure of 0.5 MPa, a temperature of 190°C and a seal width of 3 mm for 3 seconds. Further, one long side is similarly heat-sealed, 1 g of water is added to the bag-shaped sample, and the opening side (long side) is then similarly heat-sealed to obtain a sealed test sample containing water. A thermocouple is attached to the metal terminal portion of the test sample, and the test sample is placed in an oven, and heated from room temperature (25°C) to a test sample temperature of 140°C at a temperature rise rate of 6°C/min.

The sealing strength at 25°C of the adhesive film 1 for metal terminal according to the present disclosure is preferably 80 N/15 mm or more, more preferably 90 N/15 mm or more, still more preferably 100 N/15 mm or more, and preferably 200 N/15 mm or less, more preferably 180 N/15 mm or less, still more preferably 160 N/15 mm or less, and is preferably in the range of about 80 to 200 N/15 mm, about 80 to 180 N/15 mm, about 80 to 160 N/15 mm, about 90 to 200 N/15 mm, about 90 to 180 N/15 mm, about 90 to 160 N/15 mm, about 100 to 200 N/15 mm, about 100 to 180 N/15 mm, or about 100 to 160 N/15 mm when measured by the following method for measurement of sealing strength.

The sealing strength at 60°C of the adhesive film 1 for metal terminal according to the present disclosure is preferably 40 N/15 mm or more, more preferably 50 N/15 mm or more, still more preferably 60 N/15 mm or more, and preferably 120 N/15 mm or less, more preferably 110 N/15 mm or less, still more preferably 100 N/15 mm or less, and is preferably in the range of about 40 to 120 N/15 mm, about 40 to 110 N/15 mm, about 40 to 110 N/15 mm, about 50 to 120 N/15 mm, about 50 to 110 N/15 mm, about 50 to 110 N/15 mm, about 60 to 120 N/15 mm, about 60 to 110 N/15 mm, or about 60 to 110 N/15 mm when measured by the following method for measurement of sealing strength.

The sealing strength at 100°C of the adhesive film 1 for metal terminal according to the present disclosure is preferably 10 N/15 mm or more, more preferably 15 N/15 mm or more, still more preferably 20 N/15 mm or more, and preferably 80 N/15 mm or less, more preferably 70 N/15 mm or less, still more preferably 60 N/15 mm or less, and is preferably in the range of about 10 to 80 N/15 mm, about 10 to 70 N/15 mm, about 10 to 60 N/15 mm, about 15 to 80 N/15 mm, about 15 to 70 N/15 mm, about 15 to 60 N/15 mm, about 20 to 80 N/15 mm, about 20 to 70 N/15 mm, or about 20 to 60 N/15 mm when measured by the following method for measurement of sealing strength.

The sealing strength at 120°C of the adhesive film 1 for metal terminal according to the present disclosure is preferably 3 N/15 mm or more, more preferably 5 N/15 mm or more, still more preferably 10 N/15 mm or more, and preferably 45 N/15 mm or less, more preferably 40 N/15 mm or less, still more preferably 35 N/15 mm or less, and is preferably in the range of about 3 to 45 N/15 mm, about 3 to 40 N/15 mm, about 3 to 35 N/15 mm, about 5 to 45 N/15 mm, about 5 to 40 N/15 mm, about 5 to 35 N/15 mm, about 10 to 45 N/15 mm, about 10 to 40 N/15 mm, or about 10 to 35 N/15 mm when measured by the following method for measurement of sealing strength.

The sealing strength at 130°C of the adhesive film 1 for metal terminal according to the present disclosure is preferably 2 N/15 mm or more, more preferably 3 N/15 mm or more, still more preferably 5 N/15 mm or more, and preferably 45 N/15 mm or less, more preferably 40 N/15 mm or less, still more preferably 35 N/15 mm or less, and is preferably in the range of about 2 to 45 N/15 mm, about 2 to 40 N/15 mm, about 2 to 35 N/15 mm, about 3 to 45 N/15 mm, about 3 to 40 N/15 mm, about 3 to 35 N/15 mm, about 5 to 45 N/15 mm, about 5 to 40 N/15 mm, or about 5 to 35 N/15 mm when measured by the following method for measurement of sealing strength.

### <Measurement of sealing strength (measurement temperatures of 25°C, 60°C, 100°C, 120°C and 130°C)>

The exterior material for electrical storage devices, which has been used in <Unsealing test method> above, is cut into a size of 60 mm (TD) and 150 mm (MD), the exterior material is then folded in half in the machine direction at the location of the fold (intermediate in the machine direction) with the heat-sealable resin layer on the inner side, and the adhesive film is sandwiched between the inner surfaces. The size of the adhesive film is 30 mm × 15 mm, and at a distance of about 10 mm in the machine direction from the fold of the exterior material (60 mm × 75 mm) folded in half, the adhesive film is sandwiched at the center in the transverse direction of the exterior material (60 mm × 75 mm) folded in half. Here, 30 mm of the long side of the adhesive film placed along the transverse direction of the exterior material (60 mm × 75 mm) folded in half, and 15 mm of the short side of the adhesive film is placed along the machine direction of the exterior material (60 mm × 75 mm) folded in half. In this state, heat sealing is performed under the condition of 240°C × 1.0 MPa × 5 seconds using a sealing machine with upper and lower metal heads having a width of 7 mm, thereby preparing a test piece. In this test piece, the adhesive film is heat-sealed on both sides to the heat-sealable resin layer of the exterior material over the full width on the long side and a width of 7 mm on the short side. The obtained laminate is cut to acquire a 15 mm strip-shaped test piece (in which both surfaces of the adhesive film are heat-sealed in their entirety to the heat-sealable resin layer) from the center part of the location where the adhesive film is sandwiched between the heat-sealable resin layers. In accordance with the provision of JIS K 7127: 1999, the sealing strength of the obtained test piece in each of environments at measurement temperatures of 25°C, 60°C, 100°C and 120°C is measured as follows. In each of measurement environments at 25°C, 60°C, 100°C, 120°C or 130°C, one exterior material and an opposed exterior material are chucked, and pulled at a speed of 300 mm/min (distance between chucks is 50 mm) with a tensile tester with a thermostatic bath to measure the sealing strength (N/15 mm) at each temperature.

### [Metal terminal 2]

The adhesive film 1 for metal terminal according to the present disclosure is interposed between the metal terminal 2 and the exterior material 3 for electrical storage devices. The metal terminal 2 (tab) is a conductive member electrically connected to an electrode (positive electrode or negative electrode) of the electrical storage device element 4, and is composed of a metal material. The metal material that forms the metal terminal 2 is not particularly limited, and examples thereof include aluminum, nickel, and copper. For example, the metal terminal 2 connected to a positive electrode of a lithium ion electrical storage device is typically composed of aluminum or the like. In addition, the metal terminal 2 connected to a negative electrode of a lithium ion electrical storage device is typically composed of copper, nickel or the like.

From the viewpoint of enhancing electrolytic solution resistance, it is preferable that the surface of the metal terminal 2 is subjected to chemical conversion treatment. For example, when the metal terminal 2 is formed of aluminum, specific examples of the chemical conversion treatment include a known method in which a corrosion-resistant film of a phosphate, a chromate, a fluoride, a triazinethiol compound or the like. Among the methods for forming a corrosion-resistant film, phosphoric acid chromate treatment using a material including three components: a phenol resin, a chromium (III) fluoride compound and phosphoric acid is preferred.

The size of the metal terminal 2 may be appropriately set according to the size of an electrical storage device used. The thickness of the metal terminal 2 is preferably about 50 to 1000 µm, more preferably about 70 to 800 µm. In addition, the length of the metal terminal 2 is preferably about 1 to 200 mm, more preferably about 3 to 150 mm. In addition, the width of the metal terminal 2 is preferably about 1 to 200 mm, more preferably about 3 to 150 mm.

### [Exterior material 3 for electrical storage devices]

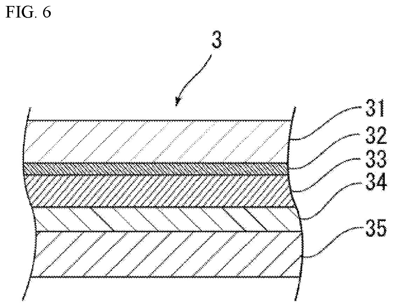

Examples of the exterior material 3 for electrical storage devices include materials having a laminated structure including a laminate having at least a base material layer 31, a barrier layer 33, and a heat-sealable resin layer 35 in the stated order. Fig. 6 shows an aspect in which the base material layer 31, an adhesive agent layer 32 provided if necessary, the barrier layer 33, an adhesive layer 34 provided if necessary, and the heat-sealable resin layer 35 are laminated in the stated order as an example of a cross-sectional structure of the exterior material 3 for electrical storage devices. In the exterior material 3 for electrical storage devices, the base material layer 31 is on the outer layer side, and the heat-sealable resin layer 35 is an innermost layer. During construction of an electrical storage device, the heat-sealable resin layers 35 located on the peripheral edge of the electrical storage device element 4 is brought into contact with each other, and heat-welded to seal the electrical storage device element 4, so that the electrical storage device element 4 is sealed. Figs. 1 to 3 show the electrical storage device 10 where the embossed-type exterior material 3 for electrical storage devices, which is molded by embossing molding, is used, but the exterior material 3 for electrical storage devices may be of non-molded pouch type. Examples of the pouch type include three-way seal, four-way seal and pillow type, and any of the types may be used.

The thickness of the laminate forming the exterior material 3 for electrical storage devices is not particularly limited, and the upper limit is preferably about 180 µm or less, about 160 µm or less, about 155 µm or less, about 140 µm or less, about 130 µm or less, or about 120 µm or less from the viewpoint of cost reduction, improvement of the energy density and the like, and the lower limit is preferably about 35 µm or more, about 45 µm or more, about 60 µm or more, or about 80 µm or more from the viewpoint of maintaining the function of the exterior material 3 for electrical storage devices, i.e., a function of protecting the electrical storage device element 4. For example, the thickness is preferably in the range of about 35 to 180 µm, about 35 to 160 µm, about 35 to 155 µm, about 35 to 140 µm, about 35 to 130 µm, about 35 to 120 µm, about 45 to 180 µm, about 45 to 160 µm, about 45 to 155 µm, about 45 to 140 µm, about 45 to 130 µm, about 45 to 120 µm, about 60 to 180 µm, about 60 to 160 µm, about 60 to 155 µm, about 60 to 140 µm, about 60 to 130 µm, about 60 to 120 µm, about 80 to 180 µm, about 80 to 160 µm, about 80 to 155 µm, about 80 to 140 µm, about 80 to 130 µm or about 80 to 120 µm.

### (Base material layer 31)

In the exterior material 3 for electrical storage devices, the base material layer 31 is a layer that functions as a base material of the exterior material for electrical storage devices, and forms the outermost layer side of the exterior material for electrical storage devices.

The material that forms the base material layer 31 is not particularly limited as long as it has an insulation quality. Examples of the material that forms the base material layer 31 include polyester, polyamide, epoxy, acrylic resins, fluororesins, polyurethane, silicone resins, phenol, polyetherimide, polyimide and mixtures and copolymers thereof. Polyester such as polyethylene terephthalate or polybutylene terephthalate has the advantage that it is excellent in electrolytic solution resistance, so that whitening etc. due to deposition of an electrolytic solution is hardly occurs, and thus the polyester is suitably used as a material for formation of the base material layer 31. In addition, a polyamide film is excellent in stretchability, can prevent occurrence of whitening due to resin breakage in the base material layer 31 during molding, and is thus suitably used as a material for formation of the base material layer 31.

The base material layer 31 may be formed of a uniaxially or biaxially stretched resin film, or may be formed of an unstretched resin film. Among them, a uniaxially or biaxially stretched resin film, particularly a biaxially stretched resin film has improved heat resistance through orientation and crystallization, and is therefore suitably used as the base material layer 31.

Among them, nylons and polyesters are preferable and biaxially stretched nylons and biaxially stretched polyesters are more preferable as resin films for formation of the base material layer 31.

The base material layer 31 can also be laminated with a resin film which is made of a different material for improving pinhole resistance, and insulation quality as a packaging of an electrical storage device. Specific examples include a multi-layered structure in which a polyester film and a nylon film are laminated, and a multi-layered structure in which a biaxially stretched polyester and a biaxially stretched nylon are laminated. When the base material layer 31 is made to have a multi-layered structure, the resin films may be bonded with the use of an adhesive, or may be directly laminated without the use of an adhesive. Examples of the method for bonding the resin films without the use of an adhesive include methods in which the resin films are bonded in a heat-melted state, such as a co-extrusion method, a sand lamination method and a thermal lamination method.

In addition, the friction of the base material layer 31 may be reduced for improving moldability. When the friction of the base material layer 31 is reduced, the friction coefficient of the surface thereof is not particularly limited, and it is, for example, 1.0 or less. Examples of the method for reducing the friction of the base material layer 31 include matting treatment, formation of a thin film layer of a slipping agent, and a combination thereof.

The thickness of the base material layer 31 is, for example, about 10 to 50 µm, preferably about 15 to 30 µm.

### (Adhesive agent layer 32)

In the exterior material 3 for electrical storage devices, the adhesive agent layer 32 is a layer disposed on the base material layer 31 if necessary for imparting adhesion to the base material layer 31. That is, the adhesive agent layer 32 is provided between the base material layer 31 and the barrier layer 33.

The adhesive agent layer 32 is formed from an adhesive capable of bonding the base material layer 31 and the barrier layer 33. The adhesive used for forming the adhesive agent layer 32 may be a two-liquid curable adhesive, or may be a one-liquid curable adhesive. In addition, the adhesion mechanism of the adhesive used for forming the adhesive agent layer 32 is not particularly limited, and may be any one of a chemical reaction type, a solvent volatilization type, a heat melting type, a heat pressing type and so on.

As resin components of adhesives that can be used for formation of the adhesive agent layer 32, polyurethane-based two-liquid curable adhesive agents; and polyamides, polyesters or blend resins of these resins and modified polyolefins are preferable because they are excellent in spreadability, durability and a yellowing inhibition action under high-humidity conditions, a thermal degradation inhibition action during heat-sealing, and so on, and effectively suppress occurrence of delamination by inhibiting a reduction in lamination strength between the base material layer 31 and the barrier layer 33.

The adhesive agent layer 32 may be made multilayered with different adhesive components. When the adhesive agent layer 32 is made multilayered with different components, it is preferable that a resin excellent in bondability to the base material layer 31 is selected as an adhesive component to be disposed on the base material layer 31 side, and an adhesive component excellent in bondability to the barrier layer 33 is selected as an adhesive component to be disposed on the barrier layer 33 side, from the viewpoint of improving lamination strength between the base material layer 31 and the barrier layer 33. When the adhesive agent layer 32 is made multilayered with different adhesive components, specific examples of the preferred adhesive component to be disposed on the barrier layer 33 side include acid-modified polyolefins, metal-modified polyolefins, mixed resins of polyesters and acid-modified polyolefins, and resins containing a copolymerization polyester.

The thickness of the adhesive agent layer 32 is, for example, about 2 to 50 µm, preferably about 3 to 25 µm.

### (Barrier Layer 33)

In the exterior material 3 for electrical storage devices, the barrier layer 33 is a layer which is intended to improve the strength of the exterior material for electrical storage devices and which has a function of preventing ingress of water vapor, oxygen, light and the like into the electrical storage device. The barrier layer 33 is preferably a metal layer, i.e. a layer formed of a metal. Specific examples of the metal forming the barrier layer 33 include aluminum, stainless and titanium, with aluminum being preferred. The barrier layer 33 can be formed from, for example, a metal foil, a metal vapor-deposited film, an inorganic oxide vapor-deposited film, a carbon-containing inorganic oxide vapor-deposited film, a film provided with any of these vapor-deposited films, or the like, and is formed preferably from a metal foil, more preferably from an aluminum foil. From the viewpoint of preventing generation of wrinkles and pinholes in the barrier layer 33 during manufacturing of the exterior material for electrical storage devices, it is more preferable to form the barrier layer from a soft aluminum foil such as annealed aluminum (JIS H4160: 1994 A8021H-O, JIS H4160: 1994 A8079H-O, JIS H4000:2014 A8021P-O, JIS H4000:2014 A8079P-O).

The thickness of the barrier layer 33 is preferably about 10 to 200 µm, more preferably about 20 to 100 µm, from the viewpoint of making pinholes less likely to be generated by molding while thinning the exterior material for electrical storage devices.

In addition, at least one surface, preferably both surfaces, of the barrier layer 33 are subjected to a chemical conversion treatment for stabilization of bonding, prevention of dissolution and corrosion, and so on. Here, the chemical conversion treatment is a treatment for forming a corrosion-resistant film on the surface of the barrier layer.

### (Adhesive layer 34)

In the exterior material 3 for electrical storage devices, the adhesive layer 34 is a layer provided between the barrier layer 33 and the heat-sealable resin layer 35 if necessary for firmly bonding the heat-sealable resin layer 35.

The adhesive layer 34 is formed from an adhesive capable of bonding the barrier layer 33 and the heat-sealable resin layer 35 to each other. The composition of the adhesive used for forming the adhesive layer is not particularly limited, and examples thereof include resin compositions containing an acid-modified polyolefin. Examples of the acid-modified polyolefin include those identical to the acid-modified polyolefins exemplified for the first polyolefin layer 12a and the second polyolefin layer 12b.

The thickness of the adhesive layer 34 is, for example, about 1 to 40 µm, preferably about 2 to 30 µm.

### (Heat-sealable resin layer 35)

In the exterior material 3 for electrical storage devices, the heat-sealable resin layer 35 is a layer which corresponds to an innermost layer and performs a function of hermetically sealing the electrical storage device element by heat-sealing the heat-sealable resin layers to each other during construction of the electrical storage device.

The resin component to be used in the heat-sealable resin layer 35 is not particularly limited as long as it can be heat-welded, and examples thereof include polyolefins and cyclic polyolefins.

Specific examples of the polyolefin include polyethylene such as low-density polyethylene, medium-density polyethylene, high-density polyethylene and linear low-density polyethylene; crystalline or noncrystalline polypropylene such as homopolypropylene, block copolymers of polypropylene (e.g. block copolymers of propylene and ethylene) and random copolymers of polypropylene (e.g. random copolymers of propylene and ethylene); terpolymers of ethylene-butene-propylene; and the like. Among these polyolefins, polyethylene and polypropylene are preferred.

The cyclic polyolefin is a copolymer of an olefin and a cyclic monomer, and examples of the olefin as a constituent monomer of the cyclic polyolefin include ethylene, propylene, 4-methyl-1-pentene, butadiene and isoprene. Examples of the cyclic monomer as a constituent monomer of the cyclic polyolefin include cyclic alkenes such as norbornene, specifically cyclic dienes such as cyclopentadiene, dicyclopentadiene, cyclohexadiene and norbornadiene. Among these polyolefins, cyclic alkenes are preferable, and norbornene is further preferable. Examples of the constituent monomer include styrene.

Among these resin components, crystalline or noncrystalline polyolefins, cyclic polyolefins and blend polymers thereof are preferable, and polyethylene, polypropylene, copolymers of ethylene and norbornene, and blend polymers of two or more thereof are more preferable.

The heat-sealable resin layer 35 may be formed from one resin component alone, or may be formed from a blend polymer obtained by combining two or more resin components. Further, the heat-sealable resin layer 35 may be formed of only one layer, but may be formed of two or more layers with the same resin component or different resin components. It is particularly preferable that the second polyolefin layer 12b and the heat-sealable resin layer 35 have the same resin because adhesion between these layers is improved.

The melting peak temperature of the heat-sealable resin layer 35 is, for example, about 120°C or higher, preferably about 125°C or higher, more preferably about 130°C or higher, still more preferably 130°C or higher, still more preferably 135°C or higher, and preferably about 160°C or lower, more preferably 155°C or lower. The melting peak temperature of the heat-sealable resin layer 35 is preferably in the range of about 120 to 160 °C, about 120 to 155°C, about 125 to 160°C, about 125 to 155°C, about 130 to 160°C, about 130 to 155°C, about 135 to 160°C, about 135 to 155°C, about 140 to 160°C, or about 140 to 155 °C. As described above, since the melting peak temperature of the first polyolefin layer 12a disposed on the metal terminal 2 side is 105°C or higher and 130°C or lower, and the melting peak temperature of the second polyolefin layer 12b disposed on the side of the exterior material 3 for electrical storage devices and the melting peak temperature of the heat-sealable resin layer 35 of the exterior material 3 for electrical storage devices are 130°C or higher, it is possible to ensure close contact between a metal terminal of an electrical storage device and a heat-sealable resin layer of the exterior material for electrical storage devices until the electrical storage device reaches a high temperature (for example, about 100°C to 130°C, preferably 110°C to 130°C, particularly preferably 120°C to 130°C) and to unseal the electrical storage device at the location of the adhesive film for metal terminal to release gas generated inside the electrical storage device to the outside when the electrical storage device reaches the high temperature (for example, about 100°C to 130°C, preferably 110°C to 130°C, particularly preferably 120°C to 130°C).

The thickness of the heat-sealable resin layer 35 is not particularly limited, and is, for example, about 2 to 2000 µm, preferably about 5 to 1000 µm, still more preferably about 10 to 500 µm. The thickness of the heat-sealable resin layer 35 is, for example, about 100 µm or less, preferably about 85 µm or less, more preferably about 15 to 85 µm. For example, when the thickness of the adhesive layer 34 described later is 10 µm or more, the thickness of the heat-sealable resin layer 35 is preferably about 85 µm or less, more preferably about 15 to 45 µm. For example, when the thickness of the adhesive layer 34 described later is less than 10 µm or the adhesive layer 34 is not provided, the thickness of the heat-sealable resin layer 35 is preferably about 20 µm or more, more preferably about 35 to 85 µm.

### 2. Electrical storage device

The electrical storage device 10 of the present disclosure includes the electrical storage device element 4 including at least a positive electrode, a negative electrode and an electrolyte; the exterior material 3 for electrical storage devices that seals the electrical storage device element 4; and the metal terminal 2 electrically connected to each of the positive electrode and the negative electrode and protruding to the outside of the exterior material 3 for electrical storage devices. In the electrical storage device 10 of the present disclosure, the adhesive film 1 for metal terminal according to the present disclosure is interposed between the metal terminal 2 and the exterior material 3 for electrical storage devices. That is, the electrical storage device 10 of the present disclosure can be manufactured by a method including the step of interposing the adhesive film 1 for metal terminal according to the present disclosure between the metal terminal 2 and the exterior material 3 for electrical storage devices.

Specifically, the electrical storage device element 4 including at least a positive electrode, a negative electrode and an electrolyte is covered with the exterior material 3 for electrical storage devices such that a flange portion (a region where the heat-sealable resin layers 35 contact each other, the region being a peripheral edge portion 3a of the exterior material 3 for electrical storage devices) of the exterior material 3 for electrical storage devices can be formed on the peripheral edge of the electrical storage device element 4, where the adhesive film 1 for metal terminal according to the present disclosure is interposed between the metal terminal 2 and the heat-sealable resin layer 35 while the metal terminal 2 connected to each of the positive electrode and the negative electrode protrudes to the outside, and the heat-sealable resin layers 35 at the flange portion are heat-sealed to each other, thereby providing the electrical storage device 10 using the exterior material 3 for electrical storage devices. When the electrical storage device element 4 is stored using the exterior material 3 for electrical storage devices, the heat-sealable resin layer 35 of the exterior material 3 for electrical storage devices is on the inner side (a surface contacting the electrical storage device element 4).

The electrical storage device 10 of the present disclosure may be an electrical storage device including an electrical storage device element including at least a positive electrode, a negative electrode and an electrolyte; an exterior material for electrical storage devices which seals the electrical storage device element; and a metal terminal electrically connected to each of the positive electrode and the negative electrode and protruding to outside of the exterior material for electrical storage devices, in which an adhesive film for metal terminal is interposed between the metal terminal and the exterior material for electrical storage devices, the adhesive film for metal terminal includes a laminate including at least a resin layer A and a resin layer B, and the electrical storage device is unsealed at a location where the resin layer A is laminated in the adhesive film for metal terminal in an environment at a temperature of 100°C or higher and 130°C or lower (environment at a temperature of preferably 111°C or higher and 130°C or lower, more preferably 115°C or higher and 130°C or lower, still more preferably 120°C or higher and 130°C or lower). That is, as long as the electrical storage device is unsealed at a location where the resin layer A (for example, the first polyolefin layer 12a or the second polyolefin layer 12b) is laminated in the adhesive film 1 for metal terminal, the resin layer B (for example, the base material 11) is not required to have a cross-sectional hardness of 15N/mm² or more as measured in an environment at a temperature of 110°C, and the resin layer A (for example, at least one of the first polyolefin layer 12a and the second polyolefin layer 12b) is not required to have a melting peak temperature of 105°C or higher and 130°C or lower. As in the adhesive film 1 for metal terminal according to the present disclosure, the electrical storage device can be suitably unsealed at a location where the resin layer A is laminated (for example, in particular, an interface portion between the first polyolefin layer 12a and the base material 11 or an interface portion between the second polyolefin layer 12b and the base material 11) in an environment at a temperature of 100°C or higher and 130°C or lower, preferably 110°C or higher and 130°C or lower, more preferably 120°C or higher and 130°C or lower when the resin layer B has a cross-sectional hardness of 15 N/mm² or more as measured in an environment at a temperature of 110°C and the resin layer A has a melting peak temperature of 105°C or higher and 130°C or lower. For performing the unsealing at a location where the resin layer A is laminated in the adhesive film for metal terminal in an environment at a temperature of preferably 111°C or higher and 130°C or lower, more preferably 115°C or higher and 130°C or lower, still more preferably 120°C or higher and 130°C or lower, it is preferable that the resin layer A of the adhesive film for metal terminal is formed of polypropylene, and it is preferable that the resin layer A of the adhesive film for metal terminal is formed of polypropylene. When the resin layer A of the adhesive film for metal terminal is formed of polyethylene, the unsealing temperature tends to be low.

Further, the electrical storage device 10 of the present disclosure may be an electrical storage device including an electrical storage device element including at least a positive electrode, a negative electrode and an electrolyte; an exterior material for electrical storage devices which seals the electrical storage device element; and a metal terminal electrically connected to each of the positive electrode and the negative electrode and protruding to outside of the exterior material for electrical storage devices, in which an adhesive film for metal terminal is interposed between the metal terminal and the exterior material for electrical storage devices, the adhesive film for metal terminal includes a laminate including a first polyolefin layer, a base material, and a second polyolefin layer disposed on the side of the exterior material for electrical storage devices, in the stated order, the first polyolefin layer has a melting peak temperature of 105°C or higher and 130°C or lower, the second polyolefin layer has a melting peak temperature of 130°C or higher, the exterior material for electrical storage devices includes a laminate including at least a base material layer, a barrier layer and a heat-sealable resin layer, and the heat-sealable resin layer has a melting peak temperature of 130°C or higher. That is, in the electrical storage device, the melting peak temperature of the first polyolefin layer disposed on the metal terminal side is 105°C or higher and 130°C or lower, and the melting peak temperature of the second polyolefin layer disposed on the side of the exterior material for electrical storage devices and the melting peak temperature of the heat-sealable resin layer of the exterior material for electrical storage devices are 130°C or higher. Since the electrical storage device has the above-mentioned configuration, it is possible to ensure close contact between a metal terminal of an electrical storage device and a heat-sealable resin layer of the exterior material for electrical storage devices until the electrical storage device reaches a high temperature (for example, about 100°C to 130°C, preferably 110°C to 130°C, particularly preferably 120°C to 130°C) and to unseal the electrical storage device at the location of the adhesive film for metal terminal to release gas generated inside the electrical storage device to the outside when the electrical storage device reaches the high temperature (for example, about 100°C to 130°C, preferably 110°C to 130°C, particularly preferably 120°C to 130°C).

The exterior material for electrical storage devices according to the present disclosure can be suitably used for electrical storage devices such as batteries (including condensers, capacitors and the like). The exterior material for electrical storage devices according to the present disclosure may be used for either primary batteries or secondary batteries, and is preferably used for secondary batteries. The type of secondary battery to which the exterior material for electrical storage devices according to the present disclosure is applied is not particularly limited, and examples thereof include lithium ion batteries, lithium ion polymer batteries, all-solid-state batteries, semi-solid-state batteries, pseudo-solid-state batteries, polymer batteries, all polymer batteries, lead storage batteries, nickel-hydrogen storage batteries, nickel-cadmium storage batteries, nickel-iron storage batteries, nickel-zinc storage batteries, silver oxide-zinc storage batteries, metal-air batteries, polyvalent cation batteries, condensers and capacitors. Of these secondary batteries, preferred subjects to which the exterior material for electrical storage devices according to the present disclosure is applied include lithium ion batteries and lithium ion polymer batteries.

### EXAMPLES

Hereinafter, the present disclosure will be described in detail by way of examples and comparative examples. However, the present disclosure is not limited to the examples.

### Example 1

### <Manufacturing of adhesive film for metal terminal>

Using an extruder and a T-die casting apparatus, maleic anhydride-modified polypropylene (a PPa layer having a melting peak temperature of 124°C) as a second polypropylene layer on the exterior side and maleic anhydride-modified polypropylene (a PPa layer having a melting peak temperature of 140°C) as a first polyolefin layer on the metal terminal side were extruded in a thickness of 20 µm to one surface and the other surface, respectively, of polyethylene (a PP layer of homopolypropylene having a melting peak temperature of 163°C and a thickness of 40 µm) as a base material to obtain an adhesive film (total thickness: 80 µm) in which a first polypropylene layer (a PPa layer having a melting peak temperature of 140°C and a thickness of 20 µm), a base material (a PP layer having a melting peak temperature of 163°C and a thickness of 40 µm) and a second polyolefin layer (a PPa layer having a melting peak temperature of 124°C and a thickness of 20 µm) were laminated in the stated order.

### <Measurement of cross-sectional hardness of base material>

The martens hardness was adopted as the cross-sectional hardness of the base material. An adhesive film for metal terminal was cut into a size of 1.5 cm × 5 mm, embedded in a heat-resistant thermosetting epoxy resin, and polished together with the epoxy resin to expose a cross section, thereby obtaining a measurement sample. Next, a heating stage was installed on an ultra-microhardness tester equipped with a Vickers indenter (HM 2000 manufactured by Fischer Instruments K.K.), and the cross-section sample was set on the stage, and heated for 5 minutes until the sample reaches 110°C. Next, against the center of the base material of the measurement sample, the indenter was pressed to a depth of 1 µm at a pressing rate of 0.1 µm/s to measure the cross-sectional hardness of the base material. The measurement was performed 10 times, and an average value thereof was adopted as a measured value. Table 1 shows the measurement results.

### <Measurement of melting peak temperature>

The melting peak temperature of the produced polyolefin was measured in accordance with the provisions of JIS K 7121: 2012 (Testing Methods for Transition Temperatures of Plastics (Amendment 1 of JIS K 7121: 1987)). The measurement was performed with a differential scanning calorimeter (DSC, Differential Scanning Calorimeter Q200 manufactured by TA Instruments). The measurement sample was held at -50°C for 15 minutes, then heated from -50°C to 210°C at a temperature rise rate of 10°C/min to measure the first melting peak temperature P (°C), and then held at 210°C for 10 minutes. Next, the measurement sample was cooled from 210°C to - 50°C at a temperature lowering rate of 10°C/min, and held for 15 minutes. Further, the second melting peak temperature Q (°C) was measured by heating the measurement sample from -50°C to 210°C at a temperature rise rate of 10°C/min. The flow rate of the nitrogen gas was set to 50 ml/min. In accordance with the above procedure, the first measured melting peak temperature P (°C) and the second measured melting peak temperature Q (°C) were determined, and the first measured melting peak temperature was adopted as a melting peak temperature. Table 1 shows the measurement results.

### <Ten-point average roughness of surface of outermost layer of adhesive film 1>

The ten-point average roughness of the surface of the first polyolefin layer of the adhesive films for metal terminal which were obtained in each of Examples 1 and 2 was measured by a method in accordance with the provisions of JIS B 0601: 1994.

The measurement was performed under conditions of an objective lens magnification of 50 and no cutoff using Laser Microscope VK-9710 manufactured by KEYENCE CORPORATION. As a result, the ten-point average roughness was 0.46 µm in Example 1, 0.46 µm in Example 2, 0.44 µm in Example 3, and 0.44 µm in Example 4.

### <Unsealing test method>

An aluminum plate having a width of 4 mm, a thickness of 70 µm and a length of 40 mm was used as a metal terminal. The adhesive film for metal terminal was cut into a size of 1 cm in length and 1 cm in width. Next, as shown in the schematic diagram of Fig. 5, the metal terminal was sandwiched between two adhesive films for metal terminal in such a manner that the adhesive film for metal terminal and the long side of the metal terminal were orthogonal to each other, and the adhesive film for metal terminal was heat-sealed to the metal terminal under the conditions of a pressure of 0.2 MPa, a temperature of 180°C and a time of 3 seconds to obtain a metal terminal with an adhesive film for metal terminal. An exterior material for electrical storage devices with a total thickness of 121 µm, in which a base material layer (PET (thickness: 12 µm)/adhesive (thickness: 2 µm)/nylon (thickness: 15 µm)), an adhesive agent layer (thickness: 2 µm), a barrier layer (aluminum alloy foil having a thickness of 40 µm)/an adhesive layer (maleic anhydride-modified polypropylene having a thickness of 25 µm) and a heat-sealable resin layer (polypropylene having a melting peak temperature of 150°C and a thickness of 25 µm) are laminated in the stated order, was prepared, and cut into a size of 8 cm × 19 cm. Next, two metal terminals with adhesive film for metal terminal were placed at an interval of 2 cm on the short side of the exterior material for electrical storage devices, and the long side of the exterior material for electrical storage devices was folded. Next, the short side on which the metal terminal with adhesive film for metal terminal is disposed was heat-sealed under the conditions of a pressure of 0.5 MPa, a temperature of 190°C and a seal width of 3 mm for 3 seconds. Further, one long side was similarly heat-sealed, 1 g of water was added to the bag-shaped sample, and the opening side (long side) was then similarly heat-sealed to obtain a sealed test sample containing water. A thermocouple was attached to the metal terminal portion of the test sample, the test sample was placed in an oven, and heated from room temperature (25°C) to a test sample temperature of 140°C at a temperature rise rate of 6°C/min. A sample that was unsealed at 120°C or higher and 130°C or lower was rated "A", a sample that was unsealed at 100°C or higher and lower than 120°C was rated "B", a sample that was unsealed at higher than 130°C and 140°C or lower or was not sealed even when the temperature exceeded 130°C and reached 140°C was rated "C". The results are shown in Table 1.

### <Measurement of sealing strength (measurement temperatures of 25°C, 60°C, 100°C and 120°C)>

The exterior material for electrical storage devices, which had been used in <Unsealing test method> above, was cut into a size of 60 mm (TD) and 150 mm (MD), the exterior material was then folded in half in the machine direction at the location of the fold (intermediate in the machine direction) with the heat-sealable resin layer on the inner side, and the adhesive film was sandwiched between the inner surfaces. The size of the adhesive film is 30 mm × 15 mm, and at a distance of about 10 mm in the machine direction from the fold of the exterior material (60 mm × 75 mm) folded in half, the adhesive film is sandwiched at the center in the transverse direction of the exterior material (60 mm × 75 mm) folded in half. Here, 30 mm of the long side of the adhesive film placed along the transverse direction of the exterior material (60 mm × 75 mm) folded in half, and 15 mm of the short side of the adhesive film is placed along the machine direction of the exterior material (60 mm × 75 mm) folded in half. In this state, heat sealing was performed under the condition of 240°C × 1.0 MPa × 5 seconds using a sealing machine with upper and lower metal heads having a width of 7 mm, thereby preparing a test piece. In this test piece, the adhesive film was heat-sealed on both sides to the heat-sealable resin layer of the exterior material over the full width on the long side and a width of 7 mm on the short side. The obtained laminate was cut to acquire a 15 mm strip-shaped test piece (in which both surfaces of the adhesive film are heat-sealed in their entirety to the heat-sealable resin layer) from the center part of the location where the adhesive film was sandwiched between the heat-sealable resin layers. In accordance with the provision of JIS K 7127: 1999, the sealing strength of the obtained test piece in each of environments at measurement temperatures of 25°C, 60°C, 100°C and 120°C was measured as follows. In each of measurement environments at 25°C, 60°C, 100°C and 120°C, one exterior material and an opposed exterior material were chucked, and pulled at a speed of 300 mm/min (distance between chucks is 50 mm) with a tensile tester with a thermostatic bath to measure the sealing strength (N/15 mm) at each temperature. The results are shown in Table 1. With the evaluation based on the sealing strength at a measurement temperature of 60°C, the seal strength at 60°C was evaluated on the basis of the following criteria. The results are shown in Table 1.
A+: 51 N/15 mm or more
A: 11 N/15 mm or more and 50 N/15 mm or less
B: 10 N/15 mm or less

### Example 2

Using an extruder and a T-die casting apparatus, maleic anhydride-modified polypropylene (a PPa layer having a melting peak temperature of 124°C) as a first polyolefin layer on the metal terminal side was extruded in a thickness of 20 µm to one surface of polyethylene (a PP layer having a melting peak temperature of 163°C and a thickness of 40 µm) as a base material to obtain an adhesive film for metal terminal (total thickness: 60 µm) in which a first polypropylene layer (a PPa layer having a melting peak temperature of 124°C and a thickness of 20 µm), a base material (a PP layer having a melting peak temperature of 163°C and a thickness of 40 µm) were laminated in the stated order. This adhesion film for metal terminal was evaluated in the same manner as in Example 1.

### Example 3

Using an extruder and a T-die casting apparatus, maleic anhydride-modified polypropylene (a PPa layer having a melting peak temperature of 124°C) as a second polypropylene layer on the exterior side and maleic anhydride-modified polypropylene (a PPa layer having a melting peak temperature of 140°C) as a first polyolefin layer on the metal terminal side were extruded in a thickness of 50 µm to one surface and the other surface, respectively, of polyethylene (a PP layer having a melting peak temperature of 133°C and a thickness of 50 µm) as a base material to obtain an adhesive film for metal terminal (total thickness: 150 µm) in which a first polypropylene layer (a PPa layer having a melting peak temperature of 140°C and a thickness of 50 µm), a base material (a PP layer having a melting peak temperature of 133°C and a thickness of 50 µm) and a second polyolefin layer (a PPa layer having a melting peak temperature of 124°C and a thickness of 50 µm) were laminated in the stated order. This adhesion film for metal terminal was evaluated in the same manner as in Example 1.

### Example 4

Using an extruder and a T-die casting apparatus, maleic anhydride-modified polypropylene (a PPa layer having a melting peak temperature of 124°C) as a first polyolefin layer on the metal terminal side was extruded in a thickness of 50 µm to one surface of polyethylene (a PP layer having a melting peak temperature of 133°C and a thickness of 50 µm) as a base material to obtain an adhesive film for metal terminal (total thickness: 100 µm) in which a first polypropylene layer (a PPa layer having a melting peak temperature of 124°C and a thickness of 50 µm), a base material (a PP layer having a melting peak temperature of 133°C and a thickness of 50 µm) were laminated in the stated order. This adhesion film for metal terminal was evaluated in the same manner as in Example 1.

### Comparative Example 1

An unstretched polypropylene film (CPP, homopolypropylene, melting peak temperature: 163°C and thickness: 50 µm) was used alone as an adhesive film for metal terminal, and evaluated in the same manner as in Example 1. The results are shown in Table 1.

### Comparative Example 2

Using an extruder and a T-die casting apparatus, maleic anhydride-modified polypropylene (a PPa layer having a melting peak temperature of 140°C) as a second polypropylene layer on the exterior side and maleic anhydride-modified polypropylene (a PPa layer having a melting peak temperature of 140°C) as a first polyolefin layer on the metal terminal side were extruded in a thickness of 50 µm to one surface and the other surface, respectively, of polyethylene (a PP layer having a melting peak temperature of 133°C and a thickness of 50 µm) as a base material to obtain an adhesive film for metal terminal (total thickness: 150 µm) in which a first polypropylene layer (a PPa layer having a melting peak temperature of 140°C and a thickness of 50 µm), a base material (a PP layer having a melting peak temperature of 133°C and a thickness of 50 µm) and a second polyolefin layer (a PPa layer having a melting peak temperature of 140°C and a thickness of 50 µm) were laminated in the stated order. This adhesion film for metal terminal was evaluated in the same manner as in Example 1.

**[Table 1]**

| | Melting peak temperature, resin and thickness of each layer | | | Cross-sectional hardness of base material at 110°C (N/mm²) | Evaluation of unsealing temperature | Evaluation of sealing strength (N/15 mm) | | | | Evaluation of retention of sealing strength at 60°C |
|---|---|---|---|---|---|---|---|---|---|---|
| | First polyolefin on metal terminal side | Base material | Second polyolefin on exterior side | | | 25°C | 60°C | 100°C | 120°C | |
| Example 1 | 140°C PPa (20 µm) | 163°C Homopolymer (40 µm) | 124°C PPa (20 µm) | 38 | A | 122 | 83 | 35 | 12 | A+ |
| Example 2 | 124°C PPa (20 µm) | 163°C Homopolymer (40 µm) | - | 38 | A | 118 | 78 | 33 | 15 | A+ |
| Example 3 | 140°C PPa (50 µm) | 133°C Random polymer (50 µm) | 124°C PPa (50 µm) | 18 | A | 120 | 80 | 33 | 18 | A+ |
| Example 4 | 124°C PPa (50 µm) | 133°C Random polymer (50 µm) | - | 18 | A | 119 | 79 | 32 | 17 | A+ |
| Comparative Example 1 | - | 163°C Homopolymer (50 µm) | - | 43 | C | 121 | 108 | 68 | 49 | A+ |
| Comparative Example 2 | 140°C PPa (50 µm) | 133°C Random polymer (50 µm) | 140°C PPa (50 µm) | 14 | C | 120 | 105 | 65 | 38 | A+ |

As described above, the present disclosure provides inventions of aspects as described below.

Item 1. An adhesive film for metal terminal which is interposed between a metal terminal that is electrically connected to an electrode of an electrical storage device element and an exterior material for electrical storage devices which seals the electrical storage device element,
the adhesive film for metal terminal including a laminate including at least a resin layer A and a resin layer B, in which
the resin layer A has a melting peak temperature of 105°C or higher and 130°C or lower and the resin layer B has a cross-sectional hardness of 15 N/mm² or more as measured in an environment at a temperature of 110°C.

Item 2. The adhesive film for metal terminal according to item 1, in which the resin layer A is at least one outermost layer of the adhesive film for metal terminal.

Item 3. The adhesive film for metal terminal according to item 1 or 2, in which the resin layer B is not an outermost layer of the adhesive film for metal terminal.

Item 4. The adhesive film for metal terminal according to any one of items 1 to 3, including a laminate including a first polyolefin layer disposed on the metal terminal side, a base material, and a second polyolefin layer disposed on the side of the exterior material for electrical storage devices, in the stated order, in which
at least one of the first polyolefin layer and the second polyolefin layer is the resin layer A.

Item 5. The adhesive film for metal terminal according to item 4, in which the base material is the resin layer B.

Item 6. The adhesive film for metal terminal according to item 4 or 5, in which at least one of the first polyolefin layer and the second polyolefin layer contains an acid-modified polyolefin.

Item 7. The adhesive film for metal terminal according to any one of items 4 to 6, in which the base material contains a polyolefin backbone.

Item 8. The adhesive film for metal terminal according to any one of items 4 to 7, in which surfaces of the first polyolefin layer and the base material are in contact with each other, and surfaces of the second polyolefin layer and the base material are in contact with each other.

Item 9. A method for manufacturing an adhesive film for metal terminal which is interposed between a metal terminal that is electrically connected to an electrode of an electrical storage device element and an exterior material for electrical storage devices which seals the electrical storage device element,
the adhesive film for metal terminal including a laminate including at least a resin layer A and a resin layer B, in which
the resin layer A has a melting peak temperature of 105°C or higher and 130°C or lower and the resin layer B has a cross-sectional hardness of 15 N/mm² or more as measured in an environment at a temperature of 110°C.

Item 10. A metal terminal with adhesive film for metal terminal in which the adhesive film for metal terminal according to any one of items 1 to 8 is attached to the metal terminal.

Item 11. An electrical storage device including: an electrical storage device element including at least a positive electrode, a negative electrode and an electrolyte; an exterior material for electrical storage devices that seals the electrical storage device element; and a metal terminal electrically connected to each of the positive electrode and the negative electrode and protruding to outside of the exterior material for electrical storage devices, in which
the adhesive film for metal terminal according to any one of items 1 to 8 is interposed between the metal terminal and the exterior material for electrical storage devices.

Item 12. An electrical storage device including: an electrical storage device element including at least a positive electrode, a negative electrode and an electrolyte; an exterior material for electrical storage devices which seals the electrical storage device element; and a metal terminal electrically connected to each of the positive electrode and the negative electrode and protruding to outside of the exterior material for electrical storage devices, in which
an adhesive film for metal terminal is interposed between the metal terminal and the exterior material for electrical storage devices,
the adhesive film for metal terminal includes a laminate including at least a resin layer A and a resin layer B, and
the electrical storage device is unsealed at a location where the resin layer A is laminated in the adhesive film for metal terminal in an environment at a temperature of 100°C or higher and 130°C or lower.

Item 13. An electrical storage device including: an electrical storage device element including at least a positive electrode, a negative electrode and an electrolyte; an exterior material for electrical storage devices which seals the electrical storage device element; and a metal terminal electrically connected to each of the positive electrode and the negative electrode and protruding to outside of the exterior material for electrical storage devices, in which
an adhesive film for metal terminal is interposed between the metal terminal and the exterior material for electrical storage devices,
the adhesive film for metal terminal includes a laminate including at least a resin layer A and a resin layer B,
the resin layer A has a melting peak temperature of 105°C or higher and 130°C or lower,
the resin layer B has a cross-sectional hardness of 15 N/mm² or more as measured in an environment at a temperature of 110°C,
the exterior material for electrical storage devices includes a laminate including at least a base material layer, a barrier layer and a heat-sealable resin layer, and
a melting peak temperature of the heat-sealable resin layer is 130°C or higher.

Item 14. An exterior material for electrical storage devices which is used for an electrical storage device,
the electrical storage device including: an electrical storage device element including at least a positive electrode, a negative electrode and an electrolyte; an exterior material for electrical storage devices which seals the electrical storage device element; and a metal terminal electrically connected to each of the positive electrode and the negative electrode and protruding to outside of the exterior material for electrical storage devices, in which
an adhesive film for metal terminal is interposed between the metal terminal and the exterior material for electrical storage devices,
the adhesive film for metal terminal includes a laminate including at least a resin layer A and a resin layer B, and has a function of being unsealed at a location where the resin layer A is laminated in an environment at a temperature of 100°C or higher and 130°C or lower,
the exterior material for electrical storage devices includes a laminate including at least a base material layer, a barrier layer and a heat-sealable resin layer, and
a melting peak temperature of the heat-sealable resin layer is higher than a melting peak temperature of the resin layer A of the adhesive film for metal terminal, and 130°C or higher.

Item 15. An adhesive film for metal terminal which is used for an electrical storage device,
the electrical storage device including: an electrical storage device element including at least a positive electrode, a negative electrode and an electrolyte; an exterior material for electrical storage devices which seals the electrical storage device element; and a metal terminal electrically connected to each of the positive electrode and the negative electrode and protruding to outside of the exterior material for electrical storage devices, in which
the adhesive film for metal terminal is interposed between the metal terminal and the exterior material for electrical storage devices,
the adhesive film for metal terminal includes a laminate including at least a resin layer A and a resin layer B, and has a function of being unsealed at a location where the resin layer A is laminated in an environment at a temperature of 100°C or higher and 130°C or lower,
the exterior material for electrical storage devices includes a laminate including at least a base material layer, a barrier layer and a heat-sealable resin layer, and
a melting peak temperature of the heat-sealable resin layer is higher than a melting peak temperature of the resin layer A of the adhesive film for metal terminal, and 130°C or higher.

Item 16. A method for manufacturing an electrical storage device including an electrical storage device element including at least a positive electrode, a negative electrode and an electrolyte; an exterior material for electrical storage devices that seals the electrical storage device element; and a metal terminal electrically connected to each of the positive electrode and the negative electrode and protruding to outside of the exterior material for electrical storage devices,
the method including a step of interposing the adhesive film for metal terminal according to any one of items 1 to 8 between the metal terminal and the exterior material for electrical storage devices, and sealing the electrical storage device element with the exterior material for electrical storage devices.

Item 17. A kit including an exterior material for electrical storage devices which is used for an electrical storage device, and the adhesive film for metal terminal according to any one of items 1 to 8,
the electrical storage device including an electrical storage device element including at least a positive electrode, a negative electrode and an electrolyte; an exterior material for electrical storage devices that seals the electrical storage device element; and a metal terminal electrically connected to each of the positive electrode and the negative electrode and protruding to outside of the exterior material for electrical storage devices,
the kit being used with the adhesive film for metal terminal being interposed between the metal terminal and the exterior material for electrical storage devices.

### DESCRIPTION OF REFERENCE SIGNS

1: Adhesive film for metal terminal
2: Metal terminal
3: Exterior material for electrical storage devices
3a: Peripheral edge portion of exterior material for electrical storage devices
4: Electrical storage device element
10: Electrical storage device
11: Base material
12a: First polyolefin layer
12b: Second polyolefin layer
31: Base material layer
32: Adhesive agent layer
33: Barrier layer
34: Adhesive layer
35: Heat-sealable resin layer

## Claims

1. An adhesive film for metal terminal which is interposed between a metal terminal that is electrically connected to an electrode of an electrical storage device element and an exterior material for electrical storage devices which seals the electrical storage device element,
the adhesive film for metal terminal including a laminate including at least a resin layer A and a resin layer B, wherein
the resin layer A has a melting peak temperature of 105°C or higher and 130°C or lower and the resin layer B has a cross-sectional hardness of 15 N/mm² or more as measured in an environment at a temperature of 110°C.

2. The adhesive film for metal terminal according to claim 1, wherein the resin layer A is at least one outermost layer of the adhesive film for metal terminal.

3. The adhesive film for metal terminal according to claim 1 or 2, wherein the resin layer B is not an outermost layer of the adhesive film for metal terminal.

4. The adhesive film for metal terminal according to claim 1 or 2, comprising a laminate including a first polyolefin layer disposed on the metal terminal side, a base material, and a second polyolefin layer disposed on the side of the exterior material for electrical storage devices, in the stated order, wherein
at least one of the first polyolefin layer and the second polyolefin layer is the resin layer A.

5. The adhesive film for metal terminal according to claim 4, wherein the base material is the resin layer B.

6. The adhesive film for metal terminal according to claim 4, wherein at least one of the first polyolefin layer and the second polyolefin layer contains an acid-modified polyolefin.

7. The adhesive film for metal terminal according to claim 4 wherein the base material contains a polyolefin backbone.

8. The adhesive film for metal terminal according to claim 4, wherein surfaces of the first polyolefin layer and the base material are in contact with each other, and surfaces of the second polyolefin layer and the base material are in contact with each other.

9. A method for manufacturing an adhesive film for metal terminal which is interposed between a metal terminal that is electrically connected to an electrode of an electrical storage device element and an exterior material for electrical storage devices which seals the electrical storage device element,
the adhesive film for metal terminal including a laminate including at least a resin layer A and a resin layer B, wherein
the resin layer A has a melting peak temperature of 105°C or higher and 130°C or lower and the resin layer B has a cross-sectional hardness of 15 N/mm² or more as measured in an environment at a temperature of 110°C.

10. A metal terminal with adhesive film for metal terminal, wherein the adhesive film for metal terminal according to claim 1 or 2 is attached to the metal terminal.

11. An electrical storage device comprising: an electrical storage device element including at least a positive electrode, a negative electrode and an electrolyte; an exterior material for electrical storage devices that seals the electrical storage device element; and the metal terminal electrically connected to each of the positive electrode and the negative electrode and protruding to outside of the exterior material for electrical storage devices, wherein
the adhesive film for metal terminal according to claim 1 or 2 is interposed between the metal terminal and the exterior material for electrical storage devices.

12. An electrical storage device comprising: an electrical storage device element including at least a positive electrode, a negative electrode and an electrolyte; an exterior material for electrical storage devices which seals the electrical storage device element; and a metal terminal electrically connected to each of the positive electrode and the negative electrode and protruding to outside of the exterior material for electrical storage devices, wherein
an adhesive film for metal terminal is interposed between the metal terminal and the exterior material for electrical storage devices,
the adhesive film for metal terminal includes a laminate including at least a resin layer A and a resin layer B, and
the electrical storage device is unsealed at a location where the resin layer A is laminated in the adhesive film for metal terminal in an environment at a temperature of 100°C or higher and 130°C or lower.

13. An electrical storage device comprising: an electrical storage device element including at least a positive electrode, a negative electrode and an electrolyte; an exterior material for electrical storage devices which seals the electrical storage device element; and a metal terminal electrically connected to each of the positive electrode and the negative electrode and protruding to outside of the exterior material for electrical storage devices, wherein
an adhesive film for metal terminal is interposed between the metal terminal and the exterior material for electrical storage devices,
the adhesive film for metal terminal includes a laminate including at least a resin layer A and a resin layer B,
the resin layer A has a melting peak temperature of 105°C or higher and 130°C or lower,
the resin layer B has a cross-sectional hardness of 15 N/mm² or more as measured in an environment at a temperature of 110°C,
the exterior material for electrical storage devices includes a laminate including at least a base material layer, a barrier layer and a heat-sealable resin layer, and
a melting peak temperature of the heat-sealable resin layer is 130°C or higher.

14. An exterior material for electrical storage devices which is used for an electrical storage device,
the electrical storage device comprising: an electrical storage device element including at least a positive electrode, a negative electrode and an electrolyte; an exterior material for electrical storage devices which seals the electrical storage device element; and a metal terminal electrically connected to each of the positive electrode and the negative electrode and protruding to outside of the exterior material for electrical storage devices, wherein
an adhesive film for metal terminal is interposed between the metal terminal and the exterior material for electrical storage devices,
the adhesive film for metal terminal includes a laminate including at least a resin layer A and a resin layer B, and has a function of being unsealed at a location where the resin layer A is laminated in an environment at a temperature of 100°C or higher and 130°C or lower,
the exterior material for electrical storage devices includes a laminate including at least a base material layer, a barrier layer and a heat-sealable resin layer, and
a melting peak temperature of the heat-sealable resin layer is higher than a melting peak temperature of the resin layer A of the adhesive film for metal terminal, and 130°C or higher.

15. An adhesive film for metal terminal which is used for an electrical storage device,
the electrical storage device comprising: an electrical storage device element including at least a positive electrode, a negative electrode and an electrolyte; an exterior material for electrical storage devices which seals the electrical storage device element; and a metal terminal electrically connected to each of the positive electrode and the negative electrode and protruding to outside of the exterior material for electrical storage devices, wherein
the adhesive film for metal terminal is interposed between the metal terminal and the exterior material for electrical storage devices,
the adhesive film for metal terminal includes a laminate including at least a resin layer A and a resin layer B, and has a function of being unsealed at a location where the resin layer A is laminated in an environment at a temperature of 100°C or higher and 130°C or lower,
the exterior material for electrical storage devices includes a laminate including at least a base material layer, a barrier layer and a heat-sealable resin layer, and
a melting peak temperature of the heat-sealable resin layer is higher than a melting peak temperature of the resin layer A of the adhesive film for metal terminal, and 130°C or higher.

16. A method for manufacturing an electrical storage device including an electrical storage device element including at least a positive electrode, a negative electrode and an electrolyte; an exterior material for electrical storage devices that seals the electrical storage device element; and a metal terminal electrically connected to each of the positive electrode and the negative electrode and protruding to outside of the exterior material for electrical storage devices,
the method comprising a step of interposing the adhesive film for metal terminal according to claim 1 or 2 between the metal terminal and the exterior material for electrical storage devices, and sealing the electrical storage device element with the exterior material for electrical storage devices.

17. A kit comprising an exterior material for electrical storage devices which is used for an electrical storage device, and the adhesive film for metal terminal according to claim 1 or 2,
the electrical storage device including an electrical storage device element including at least a positive electrode, a negative electrode and an electrolyte; an exterior material for electrical storage devices that seals the electrical storage device element; and a metal terminal electrically connected to each of the positive electrode and the negative electrode and protruding to outside of the exterior material for electrical storage devices,
the kit being used with the adhesive film for metal terminal being interposed between the metal terminal and the exterior material for electrical storage devices.
